(19) Europäisches Patentamt
European Patent Office
Office européen des brevets

(11) Veröffentlichungsnummer: **0 318 999 B1**

(12) **EUROPÄISCHE PATENTSCHRIFT**

(45) Veröffentlichungstag der Patentschrift: **02.03.94**

(51) Int. Cl.$^5$: **C08G 18/28**, C08G 18/08, C09D 7/02, B01F 17/52

(21) Anmeldenummer: **88120082.8**

(22) Anmeldetag: **01.12.88**

Die Akte enthält technische Angaben, die nach dem Eingang der Anmeldung eingereicht wurden und die nicht in dieser Patentschrift enthalten sind.

# (54) Als Dispergiermittel und als Dispersionsstabilisatoren geeignete Additionsverbindungen, Verfahren zu ihrer Herstellung, ihre Verwendung und damit beschichtete Feststoffe.

(30) Priorität: **04.12.87 DE 3741182**

(43) Veröffentlichungstag der Anmeldung:
**07.06.89 Patentblatt 89/23**

(45) Bekanntmachung des Hinweises auf die Patenterteilung:
**02.03.94 Patentblatt 94/09**

(84) Benannte Vertragsstaaten:
**AT BE CH DE ES FR GB IT LI LU NL SE**

(56) Entgegenhaltungen:
**EP-A- 0 154 678**
**EP-A- 0 270 126**
**DE-A- 3 527 038**
**US-A- 4 659 780**

(73) Patentinhaber: **Byk-Chemie GmbH**
**Postfach 10 02 45**
**D-46463 Wesel(DE)**

(72) Erfinder: **Haubennestel, Karl-Heinz, Dipl.-Ing.**
**Hermann-Hesse-Strasse 30**
**D-4230 Wesel(DE)**
Erfinder: **Pritschins, Wolfgang, Dr. Dipl.-Chem.**
**Kleistrasse 4**
**D-4230 Wesel(DE)**

(74) Vertreter: **Türk, Dietmar, Dr. rer. nat. et al**
**Türk, Gille, Hrabal, Leifert**
**Patentanwälte**
**Brucknerstrasse 20**
**D-40593 Düsseldorf (DE)**

EP 0 318 999 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft als Dispergiermittel und als Dispersionsstabilisatoren geeignete Additionsverbindungen oder deren Salze, erhältlich durch Umsetzung von Polyisocyanaten, Hydroxyverbindungen, Zerewitinoff-Wasserstoff sowie mindestens eine stickstoffhaltige, basische Gruppe enthaltenden Verbindungen und gegebenenfalls Verbindungen, die Aminwasserstoff enthalten, gegebenenfalls in Anwesenheit von Lösungsmitteln und gegebenenfalls in Gegenwart von Umsetzungskatalysatoren.

Die Erfindung betrifft weiterhin Verfahren zur Herstellung dieser Additionsverbindungen, deren Verwendung als Dispergiermittel und Dispersionsstabilisatoren und in flüssige Systeme einzuarbeitende pulver- oder faserförmige Feststoffe, die mit solchen Dispergiermitteln beschichtet sind.

Um Feststoffe in flüssige Medien einzubringen, sind hohe mechanische Kräfte notwendig. Um diese Dispergierkräfte zu reduzieren, ist es üblich, Dispergiermittel anzuwenden, welche die Einarbeitung erleichtern. Hierbei handelt es sich im allgemeinen um oberflächenaktive Stoffe, auch Tenside genannt, von anionen- oder kationenaktiver sowie nichtionogener Struktur. Diese Stoffe werden in geringen Zusatzmengen, entweder auf den Feststoff direkt aufgebracht oder dem Dispergiermedium zugesetzt. Durch ein solches Tensid wird der Dispergieraufwand wesentlich reduziert.

Bekannt ist weiterhin, daß diese Feststoffe aufgrund gegenseitiger Anziehungskräfte nach dem Dispergierprozeß wieder zum Reagglomerieren neigen, was den zuvor aufgewendeten Dispergieraufwand zunichte macht und zu gravierenden Problemen führt.

Eine unzulängliche Dispergierung macht sich bemerkbar durch Viskositätsanstieg in flüssigen Systemen, Glanzverluste und Farbtonverschiebungen in Lacken und Beschichtungen, ungenügende Farbkraftentwicklung in pigmentierten Kunststoffen, sowie Verringerung der mechanischen Festigkeit in verstärkten Kunststoffen.

Zur Lösung dieser Aufgabe sind Dispergiermittel z. B. in den US-A-3 788 996, US-A 3 817 944, US-A-4 029 861, US-A-4 032 698, US-A-4048 207, US-A-4 070 388, DT-A-2 125 064, EP-A-0 018 099, EP-A-0 127 325, FR-A-2 241 597, GB-A-1 339 930, GB-A-1 393 401 und GB-A-1 393 402 vorgeschlagen. Diese Dispergiermittel führen jedoch nur zu Teillösungen, insbesondere im Hinblick auf die flockulationsfreie Mischbarkeit von verschiedenen Pigmenten untereinander, wie organische Pigmente und anorganische Pigmente. Auch neigen die nach den beschriebenen Verfahren hergestellten Pigmentpasten z. B. nach Einsatz in Lacken zu Wechselwirkungen mit dem umgebenden Medium. Es kann damit angenommen werden, daß die aufgebauten Adsorptionsschichten keine genügende Stabilität gegen Desorption aufweisen. Nach dem neuesten Stand der Technik wird in der EP-A-0 154 678 beschrieben, daß die aufgeführten Nachteile weitgehend behoben werden können durch Einsatz der dort vorgeschlagenen Additionsverbindungen. Mit diesen Additionsverbindungen können zum Teil bereits ausgezeichnete Ergebnisse erzielt werden. Bedingt durch die in den letzten Jahren veränderten Technologien zu hochmolekularen Bindemitteln, wie sie in den sogenannten High Solids, Wasserlacken, UV- und Elektronenstrahl-härtbaren Systemen verstärkt zum Einsatz kommen, wurde festgestellt, daß diese Verbindungen in solchen Bindemittel-Systemen nur unzureichend verträglich sind. Dies führt zu einer unzulänglichen Dispergierung durch nicht ausreichende Wechselwirkung mit dem Bindemittel und in vielen Fällen zu Ausfällungserscheinungenund damit verbundenen Mattierungen, Stippenbildung und Viskositätserhöhungen.

Der vorliegenden Erfindung liegt die Aufgabe zugrunde, Dispergiermittel und Dispersionsstabilisatoren zu finden, die die obigen Nachteile nicht oder in wesentlich geringerem Umfange aufweisen, und die insbesondere zu Dispersionen von Feststoffen führen, die nach dem Dispergierprozeß nicht oder nur in untergeordnetem Ausmaß zum Reagglomerieren neigen und demzufolge eine bessere Stabilität aufweisen.

Überraschenderweise wurde nun gefunden, daß der Einbau von silikon-bzw. urethanhaltigen Gruppen die Verträglichkeit mit solchen Systemen überdurchschnittlich verbessert. Die damit erhaltenen Dispergiermittel sind insgesamt wesentlich universeller verträglich. Außerdem sind diese silikon- bzw. urethanhaltigen Gruppen besonders stabil gegen Kettenabbaureaktionen durch z. B. Hydrolyse oder andere umweltbedingte Einflüsse, wie sie z. B. bei der Freibewitterung auftreten. Dies führt zu einer verbesserten Stabilität solcher diese Dispergiermittel enthaltenden Beschichtungen.

Es wurde also überraschenderweise gefunden, daß die Aufgabenstellung mit den nachfolgend definierten Additionsprodukten gelöst werden kann. Gegenstand der Erfindung sind demgemäß als Dispergiertmittel und als Dispersionsstabilisatoren geeignete Additionsverbindungen und deren Salze, die dadurch erhältlich sind, daß gegebenenfalls in Anwesenheit von Lösungsmitteln und gegebenenalls in Gegenwart von Umsetzungskatalysatoren, Polyisocyanate mit einer mittleren Funktionalität von 2,5 bis 10

a) mit Monohydroxyverbindungen der Formel I

Y-OH      I

wobei Y die folgenden Bedeutungen hat:

i) aliphatische und/oder cycloaliphatische Kohlenwasserstoffgruppen mit 8 bis 30 Kohlenstoffatomen, deren Wasserstoffatome teilweise durch Halogene und/oder Arylreste ersetzt sein können,

ii) mindestens eine -O-, und/oder -COO-Gruppe enthaltende aliphatische, cycloaliphatische und/oder aromatische Gruppen mit mittleren Molekulargewichten $\overline{M}_n$ von 200 bis 10000, wobei die Wasserstoffatome teilweise durch Halogene ersetzt sein können,

in einer solchen Menge umgesetzt werden, daß 10 bis 70 %, vorzugsweise 15 bis 45 % und besonders bevorzugt 20 bis 40 % der NCO-Gruppen umgesetzt sind,

b) mit Verbindungen der Formel II

$G\text{-}(E)_n$ II

wobei E für -OH, - $NH_2$ und/oder -NHR (worin R eine Alkylgruppe mit 1 bis 4 Kohlenstoffatomen darstellt), und n für 2 oder 3 stehen, und G eine mindestens 2 Kohlenstoffatome enthaltende aliphatische cycloaliphatische und/oder aromatische Gruppe mit mittlerem Molekulargewicht $\overline{M}_n$ von höchstens 3000 darstellt, die -O-, -COO-, -CONH-, -S-, und/oder -$SO_2$-Gruppen enthalten kann, in einer solchen Menge umgesetzt werden, daß weitere 1 bis 50 %, vorzugsweise 5 bis 45 % und besonders bevorzugt 15 bis 40 % der NCO-Gruppen der ursprünglich eingesetzten Polyisocyanate umgesetzt sind, wobei jedoch durch die Umsetzungen a) und b) insgesamt mindestens 20 % und maximal 85 %, vorzugsweise 30 bis 65 % und besonders bevorzugt 40 bis 60 % der NCO-Gruppen der ursprünglich eingesetzten Polyisocyanate umgesetzt sind,

c) mit Verbindungen der allgemeinen Formel III

Z-Q III

worin Q für -OH, -$NH_2$, -NHR (worin R für eine Alkylgruppe mit 1 bis 4 Kohlenstoffatomen steht) oder -SH steht und Z eine aliphatische Gruppe mit 2 bis 10 C-Atomen mit mindestens einer tertiären Aminogruppe oder eine heterocyclische Gruppe mit mindestens einem basischen Ringstickstoffatom ist, das kein Wasserstoffatom enthält, wobei die heterocyclische Gruppe über eine Alkylengruppe mit bis zu 10 C-Atomen an die Gruppe Q gebunden sein kann, in einer solchen Menge umgesetzt werden, daß auf jede verbleibende in den Stufen a) und b) nicht umgesetzte Isocyanatgruppe mindestens ein Molekül der Verbindung Z-Q entfällt,

dadurch gekennzeichnet, daß mindestens 1 Mol-% der oben definierten Verbindungen der Formel I ersetzt sind durch solche Verbindungen der Formel Ia,

Y'-OH Ia

in den Y' eine aliphatische, cycloaliphatische und/oder aromatische Gruppe mit mittleren Molekulargewichten $M_n$ von 200 bis 10000, wobei die Wasserstoffatome teilweise durch Halogene ersetzt sein können, und die mindestens eine -NHCOO-Gruppe enthalten, darstellt und/oder mindestens 1 Mol-% der oben definierten Verbindungen der Formel I ersetzt sind durch monohydroxyfunktionelle Polyacrylsäureester und/oder Polymethacrylsäureester und/oder Copolymerisaten davon mit bis zu 50 Mol-% (bezogen auf Monomereinheiten) Comonomeren wie Vinylester, Vinylether, Styrol, Vinyltoluol und/oder Vinylcyclohexan, mit einem mittleren Molekulargewicht $\overline{M}_n$ von höchstens 10000, und/oder mindestens 1 Mol-% der oben definierten Verbindungen der Formel II ersetzt sind durch solche Verbindungen der Formel IIa,

$G'\text{-}(OH)_n$ IIa

in denen G' eine mindestens 2 Kohlenstoffatome enthaltende aliphatische, cycloaliphatische und/oder aromatische Gruppe mit mittlerem Molekulargewicht $\overline{M}_n$ von höchstens 3000 darstellt, die mindestens eine -NHCOO- und/oder -$Si(CH_3)_2O$-Gruppe enthält, darstellt und n für eine Zahl von 2 bis 3 steht.

Wichtig ist, daß mindestens 1 Mol-%, bevorzugt 5 Mol-% und besonders bevorzugt 50 Mol-% der Verbindungen nach Formel I und/oder Formel II ersetzt sind durch Verbindungen nach Formel Ia bzw. IIa. Beispielsweise ist es möglich, das Polyisocyanat nur mit Verbindungen nach Formel Ia, II und III oder nur mit Verbindungen nach Formel I, II a und III umzusetzen.

Zur Herstellung der erfindungsgemäßen Additionsverbindungen können aber auch Gemische von verschiedenen Polyisocyanaten, Verbindungen nach Formel I, Ia, II, IIa und/oder III eingesetzt werden. Die Umsetzung der Polyisocyanate mit den Verbindungen der Formeln I bis III kann in einem einzigen Reaktionsschritt oder in mehreren Reaktionsschritten nacheinander durchgeführt werden. Das kann in beliebiger Reihenfolge geschehen, wobei auch zwei Reaktionsschritte zusammengefaßt werden können. Z. B. kann nach vollständiger oder teilweiser Umsetzung der Polyisocyanate mit der entsprechenden Menge Verbindung der Formel I und/oder Ia die weitere Umsetzung durch Zugabe einer Mischung aus den Verbindungen der Formel II und/oder IIa und III eingeleitet werden. In vielen Fällen ist es allerdings zweckmäßig, das Polyisocyanat in drei Einzelschritten nacheinander mit den Komponenten in der Reihenfolge I bzw. Ia, II bzw. IIa und III umzusetzen.

Gegenstand der Erfindung ist weiterhin das Verfahren zur Herstellung der Additionsverbindungen, wie es vorstehend beschrieben wurde.

Weiterhin ist Gegenstand der Erfindung die Verwendung der vorstehend beschriebenen Additionsverbindungen als Dispergiermittel und als Dispersionsstabilisatoren. Gegenstand der Erfindung sind weiterhin in flüssige Systeme einzuarbeitende pulver- oder faserförmige Feststoffe, die mit diesen Additionsverbindungen als Dispergiermittel und als Dispersionsstabilisatoren beschichtet sind. Pulver- oder faserförmige Feststoffe sind solche, wie sie gemäß dem Stand der Technik mit Dispergiermitteln beschichtet wurden, insbesondere organische und anorganische Pigmente, die in Anstrichmitteln, Überzugsmitteln, Formmassen oder sonstigen Kunststoffen eingesetzt werden, anorganische oder organische Füllstoffe, die zum Füllen oder Verstärken von Anstrichmitteln, Überzugsmitteln, Formmassen oder sonstigen Kunststoffen eingesetzt werden. Eine Untergruppe von derartigen Füllstoffen sind Fasern organischer und/oder anorganischer Natur, die ebenfalls als Füllstoffe oder Verstärkungsstoffe verwendet werden.

Beispiele für Pigmente sind Mono-, Di-, Tri- und Polyazopigmente, Oxazin-, Dioxazin-, Thiazin-Pigmente, Phthalocyanine und andere Metallkomplex-Pigmente, Indigoide Pigmente, Diphenylmethan-, Triarylmethan, Xanthen-, Acridin-, Chinacridon-, Methin-Pigmente, Anthrachinon Pyranthron-, Perylen- und andere polycyclische Carbonyl-Pigmente, anorganische Pigmente auf Basis von Ruß, Graphit, Titandioxid, Zinkoxid, Zinksulfid, Zinkphosphat, Bariumslfat, Lithophone, Eisenoxid, Ultramarin, Manganphosphat, Cobaltaluminat, Cobaltstannat, Cobaltzinkat, Antimonoxid, Antimonsulfid, Chromoxid, Zinkchromat, gemischten Metalloxiden von Nickel, Titan, Zink, Mangan, Cobalt, Eisen, Chrom, Antimon, Magnesium, Aluminium (beispielsweise Nickeltitangelb oder Chromtitangelb), magnetischen Eisenoxiden und Chromoxiden, Metalleffektpigmente wie Aluminiumbronzen Perlglanzpigmente, fluoreszierende und phosphoreszierende Leuchtpigmente.

Beispiele für pulver- oder faserförmige Füllstoffe sind solche, die aufgebaut sind aus pulver- oder faserförmigen Teilchen von Aluminiumoxid, Aluminiumhydroxid, Siliziumdioxid, Kieselgur, Kieselerde, Quarz, Kieselgel, Talkum, Kaolin, Glimmer, Perlite, Feldspat, Schiefermehl, Calciumsulfat, Bariumsulfat, Calciumcarbonat, Calcit, Dolomit, Glas, Kohlenstoff.

Derartige pulver- oder faserförmige Feststoffe mit einer Beschichtung von Dispergiermitteln und Dispersionsstabilisatoren gemäß der Erfindung werden in an sich bekannter Weise hergestellt, wobei anstelle der nach dem Stand der Technik bekannten Dispergiermittel diejenigen gemäß der Erfindung eingesetzt werden. Auf dem Gebiet der Faserstoffe nennt man diese Dispergiermittel häufig auch Schlichten. Dazu können die Feststoffe, z. B. in einem Wirbelbett mit einer Lösung oder Emulsion der Additionsverbindungnen gemäß der Erfindung beschichtet werden. Das Lösungs- oder Emulsionsmittel kann dann entfernt werden, es kann aber auch im Gemisch verbleiben, so daß Pasten erhalten werden. Eine andere Möglichkeit besteht z. B. darin, daß die zu beschichtenden Feststoffe in einem flüssigen Medium angeschlämmt und dieser Anschlämmung die Additionsverbindungen gemäß der Erfindung zugesetzt werden.

Auch hier kann das Anschlämmen in der Weise erfolgen, daß eine verarbeitbare Paste erhalten wird, wobei naturgemäß das flüssige Medium zum Anschlämmen angepaßt ist dem späteren Verwendungszweck dieser Paste, z. B. der Pigmentpaste.

Es gibt mehrere Möglichkeiten, die erfindungsgemäßen Additonsverbindungen auf die Feststoffoberfläche von Pigmenten aufzubringen. Dieser Vorgang kann während oder nach der Synthese von Pigmenten durch Zusatz der Additionsverbindungen zur wässrigen Pigmentsuspension, zur Pigmentsuspension in Wasser-Lösungsmittelgemischen oder zur Pigmentsuspension in Lösungsmitteln- gegebenenfalls vor, während oder nach einem Pigmentfinish oder bei ihrer Weiterverarbeitung im Anwendungsmedium erfolgen.

Der Zusatz der Additionsverbindung zur wässrigen Pigmentsuspension kann in solchen Lösungsmitteln erfolgen, die mit Wasser mindestens teilweise mischbar sind, z. B. aliphatische Alkohole mit 1-6 Kohlenstoffatomen wie Ethanol; Glykole, Glykolether und Glykolester wie Propylenglykol, Ethylglykolacetat, Methoxypropylacetat; Ketone wie Aceton, Methylethylketon; Carbonsäureamide wie Dimethylformamid, N-Methylpyrolidon.

In Verbindung mit einer thermischen Nachbehandlung eines Pigmentes - etwa zur Erhöhung seiner Deckkraft oder zur Verbesserung anderer anwendungstechnischer Eigenschaften - erfolgt die Zugabe der Additionsverbindung zweckmäßig in dem Lösungsmittel, in dem die thermische Nachbehandlung durchgeführt wird.

Die Zugabe der Additionsverbindung bzw. ihrer Lösung kann vor, während oder nach einem Finish erfolgen. Das Lösungsmittel läßt sich anschließend, etwa durch Wasserdampf, rasch und quantitativ abtreiben und die Additionsverbindung besonders einfach und mit hohem Wirkungsgrad auf die Pigmenoberfläche aufbringen. Das so präparierte Pigment kann anschließend aus der zurückbleibenden wässrigen Suspension isoliert werden.

Das Aufbringen der Additionsverbindung kann auch ohne vorausgegangene oder nachfolgende thermische Behandlung (Finish) des Pigmentes erfolgen, indem unmittelbar nach Zugabe der Additivlösung zur wässrigen Pigmentsuspension unter intensivem Rühren das verwendete Lösungsmittel etwa mit Wasserdampf wieder abdestilliert wird.

Im einfachsten Fall läßt sich die gelöste Additionsverbindung in ihrer Herstellungsform ohne vorherige Isolierung zur Beschichtung der Pigmentoberfläche einsetzen. Liegt die Additionsverbindung - bedingt durch die Synthese - in einem Lösungsmittel vor, das bei der Applizierung zur Pigmentsuspension zu unerwünschten coloristischen Veränderungen der Pigmentes oder zu technischen Schwierigkeiten führt, ist es vorteilhaft, die Additionsverbindung in eine anwendbare, für das jeweilige Pigment geeignete Form zu überführen, d.h., das Lösungsmittel ganz oder teilweise zu entfernen und gegebenenfalls durch geeignetere Lösungsmittel zu ersetzen. Wenn die Additionsverbindung basischen Charakter hat, kann es von Vorteil sein, mit sauren Verbindungen wie Carbonsäuren, vorzugsweise Essigsäure zu neutralisieren bzw. die Pigmentsuspension schwach sauer zu stellen.

Gegenüber den unbehandelten Vergleichspigmenten zeichnen sich die erfindungsgemäß präparierten Pigmente im Lack durch hervorragende rheologische Eigenschaften sowie durch deutlich verbessertes Glanz-Viskositäts- und Flockulationsverhalten, häufig auch durch höhere Farbstärke aus.

Die Verwendung der Additionsverbindungen gemäß der Erfindung als Dispergiermittel und als Dispersionsstabilisatoren kann aber auch - wie gemäß dem Stand der Technik für bekannte Dispergiermittel - so erfolgen, daß die Additionsverbindungen irgendwelchen Systemen z. B. Lacken, Kunststoffmischungen und dergleichen zugesetzt werden, die die einzuarbeitenden Feststoffe wie Pigmente, Füllstoffe, Fasern, bereits dispergiert enthalten.

Für die Herstellung der Additionsverbindungen gemäß der Erfindung werden als Polyisocyanate die auf diesem technischen Gebiet nach dem Stand der Technik brauchbaren Verbindungen eingesetzt. Sie müssen jedoch eine mittlere Funktionalität von 2,5 bis 10 haben. Beispiele sind beschrieben in EP-A-154 678 (US-A-4 647 647).

Weitere Beispiele für als Handelsprodukte erhältliche Polyisocyanate sind Desmodur VL (Polyisocyanat auf Basis Diphenylmethandiisocyanat (MDI) der Firma Bayer), Desmodur Z 4370 (Polyisocyanat auf Basis Isophorondiisocyanat (IPDI) der Firma Bayer), Polurene KD (Polyisocyanurat auf Basis Toluylendiisocyanat (TDI) der Firma SAPICI), Uronal RA.50 (Polyisocyanurat auf Basis TDI der Firma Galstaff), Polurene A (Polyisocyanat auf Basis TDI-Trimethylolpropan (TMP) der Firma SAPICI), Polurene MC (Polyisocyanat auf Basis TMP-IPDI der Firma SAPICI), Polurene MD.70 (Polyisocyanat auf Basis TMP-TDI-MDI der Firma SAPICI).

Diese Verbindungen stellen Handelsprodukte dar, die häufig nicht in reiner Form vorliegen, sondern die Gemische von gewissen Verbindungen ähnlicher Struktur darstellen. Unter mittleren Funktionalität wird verstanden, daß die Handelsprodukte hinsichtlich der Isocyanatgruppen die angegebenen Funktionalität von 2,5 bis 10, vorzugsweise 3 bis 6, aufweisen. Beispielsweise bedeutet "Funktionalität von 3", daß ein Molekül im statistischen Mittel 3 freie Isocyanatgruppen enthält. Die mittlere Funktionalität kann man experimentell dadurch ermitteln, daß man das mittlere Molekulargewicht $\overline{M}_n$ bestimmt. Außerdem bestimmt man die NCO-Zahl und errechnet daraus das NCO-Äquivalentgewicht. Die mittlere Funktionalität ist der Quotient aus dem mittleren Molekulargewicht und dem NCO-Äquivalentgewicht.

Als Monohydroxyverbindungen der Formel I können aliphatische, cycloaliphatische und/oder araliphatische Verbindungen eingesetzt werden mit jeweils 8 bis 30 Kohlenstoffatomen. Es können auch Gemische solcher Verbindungen eingesetzt werden.
Es können gradkettige und verzweigte aliphatische oder araliphatische Verbindungen eingesetzt werden. Sie können gesättigt oder ungesättigt sein. Gesättigte Verbindungen sind bevorzugt. Die Wasserstoffatome können teilweise durch Halogene, vorzugsweise durch Fluor und/oder auch Chlor ersetzt sein. Beispiele sind beschrieben in EP-A-154 678 (US-A-4 647 647).

Als Monohydroxyverbindungen der Formel I können auch solche eingesetzt werden, die mindestens eine -O- und/oder -COO-Gruppe enthalten. Es handelt sich also um Polyether , Polyester oder gemischte

Polyether-Polyester. Beispiele sind beschrieben in EP-A-154 678 (US-A-4 647 647). Weitere Beispiele sind solche Polyester, die als Startkomponente Allylalkohol oder monohydroxyfunktionelle Acrylate wie Hydroxyethylacrylat enthalten.

Bevorzugt als Verbindungen der Formel I sind solche Polyester, die durch Polymerisation eines Lactons mittels Monohydroxystartkomponente erhalten werden können, wie in EP-A-154 678 (US-A-4 647 647) beschrieben , mit einem mittleren Molekulargewicht $\overline{M}_n$ von 350 bis 5000.

Als Verbindungen der Formel I können auch Monohydroxypolyether eingesetzt werden, wie sie durch Alkoxylierung von Alkanolen, Cycloalkanolen und Phenolen erhalten werden. Diese Polyether haben zweckmäßig ein Molekulargewicht im Bereich etwa 350 bis 1500.

Als Verbindung der Formel Ia können monohydroxyfunktionelle Polyacrylsäureester und/oder Polymethacrylsäureester eingesetzt werden, wie sie durch Polymerisation von Acrylsäureestern bzw. Polymethacrylsäureestern unter Zugabe eines monohydroxyfunktionellen Polymerisationsreglers erhalten werden. Monohydroxyfunktionelle Polyacrylsäureester bzw. Polymethacrylsäureester sind solche, die im Mittel eine Hydroxygruppe im Molekül enthalten. Solche Verbindungen sind auf diesem Gebiet der Technik bereits zur Herstellung von anderen Dispergiermitteln verwendet worden, wie sie z. B. in der US-A-4 032 698 beschrieben sind. Die Herstellung dieser Verbindungen durch radikalische Polymerisation läuft nach folgendem beispielhaften Reaktionsweg ab:

$$n\ CH_2 = CHCO_2CH_3 + HS - CH_2CH_2\text{-}OH \xrightarrow{\text{Initiator (I .)}}$$

$$I - (\underset{\displaystyle CO_2CH_3}{CH_2 - CH})_n - S - CH_2CH_2\text{-}OH$$

Diese Polyacrylate haben zweckmäßig ein mittleres Molekulargewicht $\overline{M}_n$ von 300 bis 10000, vorzugsweise 500 bis 5000.

Wie dem Fachmann bekannt, erfolgt dabei die Steuerung des gewünschten mittleren Molekulargewichtes über die Regler- und Initiatorkonzentration und die Reaktionstemperatur: Je höher die Temperatur, die Regler- und die Initiatorkonzentration, desto niedriger ist das erhaltene mittlere Molekulargewicht.

Zur Steuerung der Reaktion können die nach dem Stand der Technik üblichen Regler (Z.B. 2-Mercaptoethanol, 2-Mercaptopropanol) und Initiatoren (z. B. Dibenzoylperoxid, Azobisisobutyronitril usw.) verwendet werden.

Zweckmäßig führt man die Polymerisation zur besseren Wärmeregulierung diskontinuierlich unter Rückfluß in einem geeigneten inerten Lösungsmittel bei Temperaturen von etwa 50 - 120° C durch. Bei höherem Monomerengehalt legt man häufig den größten Teil des Lösungsmittels und nur eine kleine Menge der Reaktanden vor und gibt den Rest der Reaktionslösung entsprechend dem Reaktionsverlauf zu.

Die Carboxylgruppe der monomeren Acrylate bzw. Methacrylate kann verestert sein mit aliphatischen, cycloaliphatischen und/oder aromatischen Alkoholen wie Methanol, Butanol, Cyclohexanol, 2-Ethylhexanol, Lauryl-, Stearyl-, Isobornyl-, Benzylalkohol oder mit Etheralkoholen wie 2-Methoxyethanol, 2-Phenoxyethanol, Tetrahydrofurfurylalkohol, Glycidol oder mit Polyesteralkoholen wie hydroxyfuntionellem Polycaprolacton, oder mit Alkoxypolyalkylenglykolen wie Methoxypolyethylenglykol, Methoxypolypropylenglykol. Das mittlere Molekulargewicht $\overline{M}_n$ der Veresterungskomponente liegt dabei zweckmäßig unter 2000. Zur Herstellung der hydroxyfunktionellen Polyacrylate bzw. Polymethacrylate können auch Mischungen von verschiedenen der vorstehend beschriebenen Monomere eingesetzt werden.

Zur Herstellung dieser Polyacrylate bzw. Polymethacrylate können als Comonomere auch Vinylester wie Vinylacetat, Vinylether wie Vinylethylether, Styrol, Vinyltoluol und/oder Vinylcyclohexan verwendet werden. Die so erhaltenen Copolymere enthalten dabei zweckmäßig nicht mehr als 50 Mol % an nicht acrylfunktionellen Comonomeren.

Als Monohydroxyverbindungen der Formel Ia können auch Polyurethane, Polyether-Polyurethane, Polyester-Polyurethane und/oder Polyether-Polyester-Polyurethane eingesetzt werden, die durch Additionsreaktion eines Diisocyanates mit einer Dihydroxyverbindung in Anwesenheit einer Monohydroxyverbindung erhalten werden können. Die Reaktion läuft nach folgendem beispielhaftem Reaktionsweg ab:

$CH_3(CH_2)_7-OH + 5\ OCN-(CH_2)_6-NCO + 5\ HO-(CH_2)_4-OH \rightarrow$
$CH_3(CH_2)_7-[OOCNH-(CH_2)_6-NHCOO-(CH_2)_4]_5-OH$

In diesem Fall beträgt das mittlere Molekulargewicht $\overline{M}_n$ der Polyadditionsverbindungen zweckmäßig 300 bis 6000, vorzugsweise 500 bis 3000.

Bei dieser Polyaddition entstehen im allgemeinen Gemische von mono-und difunktionellen Verbindungen mit nichtfunktionellen Verbindungen. Die Bildung von difunktionellen Verbindungen kann durch den Einsatz entsprechend stöchiometrischer Mengen an Monohydroxyverbindungen zurückgedrängt werden. Weiterhin läßt sich durch selektive Reaktionsführung, das heißt niedrige Reaktionstemperatur und schrittweise Reaktionsführung, die Bildung nicht monofunktioneller Nebenprodukte zurückdrängen. Dies gilt insbesondere bei Einsatz von Ausgangsmaterialien mit funktionellen Gruppen unterschiedlicher Reaktivität wie Isophorondiisocyanat, 2,4-Toluylendiisocyanat, 1,2-Butandiol.

Die im Gemisch mit den Monohydroxyverbindungen entstehenden Nebenprodukte stören im allgemeinen bei der weiteren Reaktion nicht. Daher können die so erhaltenen Umsetzungsprodukte ohne weiteres zur Reaktion mit den Polyisocyanaten eingesetzt werden.

Als Diisocyanat können die aus der Polyurethanchemie an sich bekannten aliphatischen, cycloaliphatischen und/oder aromatischen Diisocyanate mit 4 bis 15 Kohlenstoffatomen eingesetzt werden, wie Tetramethylen-Hexamethylen-,Trimethylhexamethylen-, Dodekamethylen-, Isophoron-Toluylen-, Diphenylmethandiisocyanat, Methylenbis(-4-cyclohexylisocyanat) oder 1,4-Cyclohexanbis(methylisocyanat).

Als Dihydroxyverbindungen zum Aufbau der urethangruppenhaltigen Verbindungen nach Formel Ia werden zweckmäßig Diole mit 2 bis 12 C-Atomen, Polyoxyalkylenglykole und dihydroxyfunktionelle Polyester mit bevorzugten Molekulargewichten von höchstens 2000 eingesetzt, wie sie auch als Verbindungen nach Formel II beschrieben sind. Als Startkomponente können Monoalkohole mit bis zu 30 C-Atomen, wie sie bereits zur Herstellung der Polyester nach Formel I beschrieben sind, aber auch die als Verbindung nach Formel I beschriebenen Monohydroxypolyester und Monohydroxypolyether eingesetzt werden. Die Polyester haben zweckmäßig ein Molekulargewicht von 300 bis 5000 und die Polyether von 200 bis 2000.

Durch die Umsetzung der Polyisocyanate mit den Verbindungen der Formel I und/oder Ia wird ein Teil der freien Isocyanatgruppen mit den Hydroxygruppen der Verbindungen der Formel I und/oder Ia zur Umsetzung gebracht. Zweckmäßig werden im Mittel auf je 1 Molekül Polyisocyanat mindestens 0,7, vorzugsweise etwa 1 Molekül der Formel I und/oder Ia umgesetzt, so daß an jedes Polyisocyanatmolekül etwa eine Verbindung der Formel I und/oder Ia gebunden ist. Wenn Polyisocyanate mit einer mittleren Funktionalität von mehr als 3 eingesetzt werden, kann auch eine größere Menge an Verbindungen der Formel I und/oder Ia eingesetzt werden. In der Regel sollten von jedem Molekül Polyisocyanat mindestens 2, bei Polyisocyanaten mit einer mittleren Funktionalität von weniger als 4 etwa 2 Isocyanatgruppen nicht umgesetzt bleiben, von denen im einfachsten Fall durch die weiteren Umsetzungen jeweils etwa eine Isocyanatgruppe zur Vernetzung mit Verbindungen der Formel II und/oder IIa dient und etwa eine Isocyanatgruppe mit Verbindungen der Formel III umgesetzt wird. Je nach Funktionalität-der eingesetzten Polyisocyanate und der Verbindungen der Formel II und/oder IIa können unter sinngemäßer Anwendung dieser Darlegungen die einzelnen Mengenverhältnisse ausgewählt werden. Für bestimmte Anwendungen kann es aber im Einzelfall sinnvoll sein, von den vorstehend genannten Umsetzungsverhältnissen abzuweichen.

Das so erhaltene Reaktionsprodukt kann dann mit Verbindungen der Formel II und/oder IIa umgesetzt werden. Diese Umsetzung kann im gleichen Gefäß wie die Umsetzung mit den Verbindungen der Formel I und/oder Ia erfolgen. Es ist in manchen Fällen auch möglich, die Polyisocyanate mit einem Gemisch von Verbindungen der Formel I bzw. Ia und II bzw. IIa zur Reaktion zu bringen. Bei der Umsetzung a) mit den Verbindungen der Formel I und/oder Ia werden also 10 bis 70 % der NCO-Gruppen der ursprünglich eingesetzten Polyisocyanate umgesetzt. Die untere Grenze liegt bevorzugt bei 15 % und besonders bevorzugt bei 20 %. Die obere Grenze liegt bevorzugt bei 45 %, besonders bevorzugt bei 40 % und in manchen Fällen sogar bei nur 30 %.

Bei der Umsetzung b) mit den Verbindungen der Formel II und/oder IIa werden 1 bis 50 % der NCO-Gruppen der ursprünglich eingesetzten Polyisocyanate umgesetzt. Die untere Grenze liegt bevorzugt bei 5 % und besonders bevorzugt bei 15 %. Die obere Grenze liegt zweckmäßig bei 45 %, bevorzugt bei 40 % und in manchen Fällen bevorzugt bei 30 %.

Insgesamt werden jedoch bei den Reaktionen a) und b) mindestens 20 % und höchstens 85 % der NCO-Gruppen der ursprünglich eingesetzten Polyisocyanate umgesetzt, wobei die untere Grenze bevorzugt bei 30 % liegt. Die obere Grenze liegt zweckmäßig bei 65 %, bevorzugt bei 60 % und in manchen Fällen bevorzugt bei 50 %. Wenn also beispielsweise gemäß a) die ursprünglich eingesetzten Isocyanate mit Verbindungen der Formel I und/oder Ia in solchen Mengen zur Reaktion gebracht werden, daß 15 % der

NCO-Gruppen umgesetzt sind, müssen bei der Umsetzung b) die Verbindungen der Formel II und/oder IIa in solchen Mengen eingesetzt werden, daß dabei mindestens 5 % der NCO-Gruppen der ursprünglich eingesetzten Polyisocyanate umgesetzt sind, insgesamt also 15 + 5 = 20 %.

Die Verbindungen der Formel II und IIa unterschieden sich von denjenigen der Formel I und Ia im wesentlichen dadurch, daß sie zwei oder drei funktionelle Gruppen enthalten, die mit den Isocyanatgruppen reagieren. Bevorzugt sind diese funktionellen Gruppen Hydroxylgruppen, weil diese Verbindungen leicht zugänglich und im Handel erhältlich sind und die erhaltenen Reaktionsprodukte gut löslich in Lösungsmitteln sind, die beim späteren Einsatz der Dispergiermittel gemäß der Erfindung zur Anwendung kommen. Beispiele für Verbindungen der Formel II sind Diole und Triole bzw. Diamine, Dialkanolamine, Monoalkanolamine mit 2 bis 12 C-Atomen, Dihydroxydialkylsulfide und Dihydroxysulfone wie Butandiol, Hexandiol, Cyclohexandimethanol, Neopentylglykol, Ethylenglykol, alkylsubstituierte Dialkanolamine, Glycerin, Trimethylolpropan, Fettsäuredialkanolamide, Thiodiglykol, Di(4-Hydroxyphenyl)sulfon, hydroxyfunktionelle Polybutadiene mit einer mittleren Funktionalität von 2 bis 3. Eine bevorzugte Gruppe von Verbindungen der Formel II sind Polyoxyalkylenglykole zweckmäßig mit Alkylengruppen mit 2 bis 4, vorzugsweise 2 Kohlenstoffatomen, und vorzugsweise mit Molekulargewichten im Bereich von zweckmäßig 400 bis 2000, vorzugsweise 600 bis 1500. Ethoxilate mit 3 Hydroxylgruppen erhält man durch Polymerisation unter Verwendung von trifunktionellen Alkoholen als Starterkomponente. Bevorzugt als Polyoxyalkylenglykole sind Polyethylenglykole.

Als Verbindungen der Formel II können auch solche eingesetzt werden, die durch Polymerisation eines Lactons, wie es bereits erwähnt wurde, mittels Di- oder Trihydroxy-Startkomponenten erhalten werden können. Zweckmäßig haben diese Polyesterpolyole ein mittleres Molekulargewicht $\overline{M}_n$ von 800 bis 2000. Als Startkomponente ist Butandiol oder Ethylenglykol bevorzugt. Es können aber auch die oben genannten Diole oder Triole als Starterkomponenten in Frage kommen.

Als Verbindungen der Formel IIa können Polyurethane, Polyether-Polyurethane, Polyester-Polyurethane und/oder Polyether-Polyester-Polyurethane eingesetzt werden, die durch Additionsreaktion eines Disocyanates mit einer Dihydroxyverbindung analog zu den entsprechenden Verbindungen nach Formel I erhalten werden können. Als Reaktionskomponenten können die bereits bei den entsprechenden urethanhaltigen Verbindungen nach Formel Ia genannten Diisocyanate und Dihydroxyverbindungen eingesetzt werden. Die auf diese Weise hergestellten Verbindungen haben eine mittlere Funktionalität von 2. Die entsprechenden trifunktionellen Verbindungen lassen sich durch Einsatz einer kleinen Menge einer trifunktionellen Starterkomponente herstellen. Als trifunktionelle Startkomponente können Triisocyanate , die oben genannten Triole, aber auch die oben genannten trihydroxyfunktionellen Polyester und Polyether eingesetzt werden. Zweckmäßig haben diese urethanhaltigen Verbindungen nach Formel IIa eine mittlere Funktionalität von 2 und ein mittleres Molekulargewicht von 300 bis 2500, bevorzugt von 500 bis 1500.

Als Verbindungen der Formel IIa können auch Bis(hydroxyalkyl)polydimethylsiloxane eingesetzt werden mit mittleren Molekulargewichten $\overline{M}_n$ von zweckmäßig 400 bis 2000.

Die Verbindungen der Formel II und/oder IIa bewirken eine Vernetzung zwischen den Reaktionsprodukten aus Polyisocyanat und Verbindungen der Formel I und/oder Ia. Im einfachsten Falle werden die Ausgangsprodukte in solchen Mengen eingesetzt, daß die Verbindungen der Formel II und/oder IIa das Zentrum des Moleküls darstellen, und daß an die Verbindungen der Formel II und/oder IIa über die Gruppen E die Polyisocyanate gebunden sind, deren verbleibende Isocyanatgruppen mit Verbindungen der Formel I und/oder Ia und der Formel III umgesetzt sind bzw. werden. Es kann naturgemäß auch eine gewisse Übervernetzung oder Untervernetzung vorliegen.

Eine zu starke Übervernetzung kann in gewissem Umfang dadurch verhindert werden, daß in verdünnten Lösungen in stark polaren, aprotischen Lösungsmitteln gearbeitet wird, wie Dimethylformamid, Dimethylacetamid und N-Methylpyrrolidon. Die Umsetzung mit Verbindungen der Formel III erfolgt in einer solchen Menge, daß auf jede verbleibende in den Stufen a) und b) nicht umgesetzte Isocyanatgruppe mindestens 0,8 Moleküle der Formel III entfallen. Wenn die Verbindungen der Formel III nur eine Gruppe enthalten, die mit den Isocyanatgruppen reagieren kann, ist ein Überschuß nicht erforderlich; vielmehr wird auf jede noch nicht umgesetzte Isocyanatgruppe etwa 1 Molekül der Formel III eingesetzt. Wenn die Verbindungen der Formel III mehr als eine Gruppe enthalten, die mit den Isocyanaten reagieren kann, reicht es auch aus, wenn auf jede noch nicht umgesetzte Isocyanatgruppe 1 Molekül der Formel III entfällt, jedoch sollte kein großer Unterschuß eingesetzt werden, um eine unerwünschte Vernetzung zu vermeiden. Ein geringfügiger Überschuß zur Vermeidung von einer unerwünschten Vernetzung kann zweckmäßig sein. Im allgemeinen reicht ein Überschuß von 25, vorzugsweise 10 Mol % aus.

Bevorzugt steht in Formel III Q für $-NH_2$ oder -OH. Weiterhin ist bevorzugt, daß in Formel III Z eine ein- oder zweikernige heterocyclische Gruppe ist, von der ein Ringstickstoffatom, vorzugsweise über eine Alkylengruppe mit 2 bis 5 C-Atomen, an die Gruppe Q gebunden ist. Bevorzugte Heterocyclen sind Triazol,

Pyrimidin, Imidazol, Pyridin, Morpholin, Pyrrolidin, Piperazin, Piperidin, Benzimidazol, Benzothiazol und/oder Triazin. Sie können Substituenten aufweisen, wie bis zu 3, vorzugsweise 1 der folgenden Gruppen: Alkyl- und/oder Alkoxy-Gruppen mit 1 bis 6, vorzugsweise 1 bis 4 C-Atomen (wobei eine Methoxygruppe bevorzugt ist), Aminogruppen (dies führt zu mehrfunktionellen Verbindungen hinsichtlich der Umsetzung mit den Isocyanaten.)

Die oben genannten Heterocyclen können direkt mit der Gruppe Q verknüpft sein. Sie können aber auch mittels einer auf diesem Gebiet üblichen Gruppe verbunden sein, wie Alkylengruppen mit 2 bis 8, vorzugsweise 2 bis 4 C-Atomen oder Polyethergruppen mit der gleichen Zahl C-Atomen. Das gleiche gilt für die tertiäre Aminogruppe. Es ist bevorzugt, daß die heterocyclischen Gruppen über ein Ringstickstoffatom und eine Alkylengruppe, vorzugsweise mit 2 bis 5 C-Atomen an die Gruppe Q gebunden sind. Die heterocyclische Gruppe kann naturgemäß neben diesem Ringstickstoffatom noch weitere Heteroatome einschließlich weiterer Ringstickstoffatome enthalten. Diese weiteren Rinstickstoffatome können gegebenenfalls auch noch ein Wasserstoffatom gebunden enthalten (z.B. beim N-Alkylpiperazin). Die heterocyclischen Gruppen können aber, wie beim Benzimidazol, auch mittels eines Rinkohlenstoffatoms an die Gruppe Q, gegebenenfalls über eine Alkylengruppe, gebunden sein. Die Art der Bindung hängt im wesentlichen ab von der jeweiligen Konstitution der heterocyclischen Gruppen und den Reaktionsfähigkeiten der einzelnen Atome, wie dies dem organischen Chemiker bekannt ist. Grundsätzlich können als Verbindungen der Formel III diejenigen eingesetzt werden, die auch auf diesem Gebiet der Technik bereits zur Herstellung von anderen Dispergiermitteln verwendet wurden, z.B. wie sie in der US-A-40 32 698 beschrieben sind. Beispiele für Verbindungen der Formel III sind beschrieben in EP-A-154 678 (US-A-4 647 647). Charakteristisch für diese Verbindungen ist, daß sie pro Molekül mindestens 1 Zerewitinoff-Wasserstoffatom enthalten, das bevorzugt mit den Isocyanatgruppen reagiert, und daß sie darüber hinaus eine stickstoffhaltige basische Gruppe besitzen, die nicht zur Harnstoffbildung mit Isocyanatgruppen befähigt ist. Diese basischen Gruppen werden gemäß dem Stand der Technik auch durch ihren pKa-Wert gekennzeichnet (vergl. US-A-3,817,944; 4,032,698 und 4,070,388). Bevorzugt sind Verbindungen mit basischen Gruppen mit einem pKa-Wert von 2 bis 14, besonders bevorzugt von 5 bis 14, und ganz besonders bevorzugt von 5 bis 12. Der pKa-Wert kann Tabellenwerken entnommen werden. Die vorstehend angegebenen Grenzwerte beziehen sich auf die Messung des pKa-Wertes bei 25° C in einer 0.01-molaren Konzentration in Wasser. Diese basischen Gruppen verleihen den Additionsverbindungen gemäß der Erfindung ebenfalls eine Basizität, wie auch auf diesem technischen Gebiet bekannt ist (vergl. die oben genannten US-Patentschriften.).

Durch diese basischen Gruppen sind die Additionsverbindungen zur Salzbildung befähigt. Sie können im Sinne der Erfindung als Dispergiermittel auch in Form von derartigen Salzen eingesetzt werden.

Diese Salze werden aus dem erhaltenen Reaktionsprodukt durch Neutralisation mit organischen oder anorganischen Säuren oder durch Quaternisierung erhalten. Bevorzugt sind Salze mit organischen Monocarbonsäuren.

Die Herstellung der erfindungsgemäßen Additionsverbindungen kann, wie gemäß dem Stand der Technik, in Gegenwart von geeigneten Lösungsmitteln oder Lösungsmittelgemischen durchgeführt werden. Geeignet sind alle Lösungsmittel, die gegenüber den Reaktionspartnern zu vernachlässigen ist und in denen die Reaktanden und die Reaktionsprodukte zumindest teilweise löslich sind. z.B. Kohlenwasserstoffe wie Toluol, Xylol, chlorierte Kohlenwasserstoffe wie Chloroform, Trichlorethan, cyclische und acyclische Ether wie Dioxan, Tetrahydrofuran, Polyalkylenglykoldialkylether, Ester wie Ethylacetat, Butylacetat, Butyrolacton, Alkylglykolester wie Ethylglykolacetat, Methoxypropylacetat, Ketone wie Methylisobutylketon, Cyclohexanon, Aceton, Säureamide wie Dimethylformamid, N-Methylpyrolidon usw. Zweckmäßig wähle man das oder die Lösemittel bereits unter Berücksichtigung des geplanten Einsatzgebietes aus. Zum Beispiel werden zur Herstellung von erfindungsgemäßen Additionsverbindung für den Einsatz in wasserverdünnbaren Lacksystemen oder zur Belegung von Pigmenten in wäßriger Suspension nach der Pigmentsynthese zweckmäßig Lösemittel eingesetzt, die ganz oder teilweise wasserverdünnbar sind.

Je nach Anwendungsgebiet können die zur Synthese verwendeten Lösungsmittel im Reaktionsgemisch verbleiben oder werden ganz oder teilweise entfernt und gegebenenfalls durch andere Lösungsmittel ersetzt.

Das Lösungsmittel kann zum Beispiel durch Abdestillieren, gegebenenfalls bei reduziertem Druck und/oder azeotrop unter Zusatz von Wasser, ganz oder teilweise entfernt werden. Die Wirksubstanz kann aber auch durch Ausfällen durch Zusatz von Nichtlösern wie aliphatischen Kohlenwasserstoffen, beispielsweise Hexan, anschließendes Abtrennen durch Filtration und gegebenenfalls Trocknen isoliert werden. Die nach einer dieser Methoden erhaltene Wirksubstanz kann dann in einem für das jeweilige Anwendungsgebiet geeigneten Lösungsmittel angelöst werden oder gegebenenfalls in reiner Form z. B. bei Pulverlacken, eingesetzt werden. Gegebenenfalls kann das Lösungsmittel, in dem das Additionsprodukt gelöst ist. nach Zusatz von geeigneten höher siedenden Lösungsmitteln, gegebenenfalls unter vermindertem Druck

und/oder azeotrop unter Zusatz von Wasser, abdestilliert werden und damit das Additionsprodukt in ein für das jeweilige Anwendungsgebiet geeignetes Lösungsmittel überführt werden.

Weiterhin können die Umsetzungen in Gegenwart von üblichen Katalysatoren durchgeführt werden, z. B. organischen Zinnverbindungen, wie Dibutylzinndilaurat, anderen organometallischen Verbindungen wie Eisenacetylacetonat, tertiären Aminen wie Triethylendiamin. Es wird insofern auf die eingangs zitierten Patentschriften verwiesen.

Durch Variation der Substituenten der Formel I, Ia, II und IIa und/oder deren Mengenverhältnissen kann die Verträglichkeit der erfindungsgemäßen Additionsverbindungen auf die unterschiedlichsten polymeren Verbindungen abgestimmt werden, welche in Überzugs und Formmassen vorliegen, in denen die Additionsverbindungen gemäß der Erfindung zur Anwendung kommen. Wenn z. B. in einem Lack das Bindemittel ein Polyurethan ist, ist es zweckmäßig, solche Additionsverbindungen gemäß der Erfindung hierfür einzusetzen, die in ihrem Molekül aufgrund der in den Ausgangsverbindungen der Formel I, Ia, II und IIa enthaltenen Gruppen auch Urethangruppen oder ähnliche Gruppen enthalten, die - wie dem Fachmann bekannt ist, mit Polyurethanen verträglich sind. Das gleiche gilt sinngemäß für z. B. Polyacrylate. Sinngemäß gilt dies für die Substituenten der Formel III, die von besonderem Einfluß sind auf die Affinität der Additionsverbindungen gemäß der Erfindung zu den verwendeten Feststoffen, die dispergiert werden sollen.

Die Erfindung wird durch die folgenden Beispiele zusätzlich erläutert. Teile sind Gewichtsteile, sofern nichts anderes gesagt ist. Bei molekular uneinheitlichen Verbindungen, wie Polymeren, sind die angegebenen Molekulargewichte Durchschnittswerte nach Zahlenmittel ($\overline{M}_n$). Die Molekulargewichte bzw. mittleren Molekulargewichte $M_n$ können nach üblichen Verfahren bestimmt werden, z. b. durch Ermittlung der OH-Zahl, der Amin-Zahl oder kryoskopisch.

Der NCO-Gehalt der zum Einsatz kommenden Polyisocyanate sowie der Reaktionsverlauf der Addition wird durch Methoden ermittelt, wie sie beschrieben sind bei Saul Patai, "The Chemistry of Cyanates and their Thioderivates", Part I, Chapter 5, 1977.

## Herstellungsbeispiele für Verbindungen der Formel I, Ia und IIa

### Polymer A:

Unter Schutzgas wird eine Lösung von 39,3 Teilen 2-Ethylhexylacrylat, 2,9 Teilen 2-Mercaptoethanol, 1,1 Teilen AIBN (Azobis-(isobutyronitril)) und 20 Teilen Ethylacetat zu 36,7 Teilen siedendem Ethylacetat so zugetropft, daß die Temperatur der Reaktionsmischung 85° C nicht übersteigt. Nach beendeter Zugabe wird noch 2 Stunden unter Rückfluß gerührt. Das Reaktionsgemisch wird nach wiederholtem Waschen mit verdünnter NaCl-Lösung mit 200 ml Toluol versetzt und über Molekularsieb getrocknet. Nach dem Abfiltrieren wird solange abdestilliert, bis der Rückstand einen Festkörper von 92 % aufweist. Das erhaltene Polyacrylat hat ein mittleres Molekulargewicht $M_n$ von 1100.

### Polymer B bis F:

Analog zur Herstellung von Polymer A werden die in der folgenden Tabelle aufgeführten Ausgangsverbindungen in den angegebenen Mengen umgesetzt.

| Polymer | $\overline{M}_n$ | Ausgangsmaterial | Teile | End-Festkörper |
|---|---|---|---|---|
| B | 1000 | 2-Mercaptoethanol<br>Isodecylmethacrylat<br>AIBN<br>Ethylacetat | 3,9<br>45,7<br>0,9<br>49,5 | 93 % |
| C | 1000 | 2-Mercaptoethanol<br>Pentadecylmethacrylat<br>AIBN<br>Ethylacetat | 3,9<br>45,7<br>0,9<br>49,5 | 95 % |
| D | 1100 | 2-Mercaptoethanol<br>2-Ethylhexylmethacrylat<br>AIBN<br>Ethylacetat | 3,5<br>45,6<br>0,9<br>50,0 | 87 % |
| E | 2000 | 2-Mercaptoethanol<br>n-Butylacrylat<br>Laurylacrylat<br>AIBN<br>Ethylacetat | 1,9<br>12,1<br>36,4<br>1,0<br>48,6 | 92 % |
| F | 3000 | 2-Mercaptoethanol<br>n-Butylacrylat<br>Isodecylmethacrylat<br>Vinylethylether<br>AIBN<br>Ethylacetat | 1,3<br>24,1<br>14,5<br>9,6<br>1,0<br>49,5 | 94 % |

**Polymer G:**

Unter Schutzgas werden 28,3 Teile IPDI (Isophorondiisocyanat), 41,4 Teile 1,12-Dodecandiol, 29,9 Teile Xylol und 0,005 Teile DBTL (Dibutylzinndilaurat) solange bei 70° C gerührt, bis sämtliche NCO-Gruppen abreagiert haben. Festkörper = 70 %. Das erhaltene Polymer hat ein mittleres Molekulargewicht $M_n$ von 800.

**Polymer H:**

Unter Schutzgas werden 35,5 Teile Polypropylenglykol ($\overline{M}_n$ = 400), 14,5 Teile Methylenbis (4-cyclohexylisocyanat) und 50 Teile MPA (Methoxypropylacetat) solange bei 80° C gerührt, bis sämtliche NCO-Gruppen abreagiert haben. Festkörper = 50 %. Das erhaltene Polymer hat ein mittleres Molekulargewicht $M_n$ von 2000.

**Polymer I:**

Unter Schutzatmosphäre werden 6,4 Teile 2-Ethylhexanol und 93,4 Teile Caprolacton homogenisiert, mit 0,002 Teilen DBTL versetzt und auf 160° C erhitzt. Man rührt bei dieser Temperatur, bis ein Festkörpergehalt von 99 % erreicht ist. Das erhaltene Polymer hat ein mittleres Molekulargewicht $\overline{M}_n$ von 2000.

**Polymer K:**

Unter Schutzgas werden 44,8 Teile n-Butylacetat, 25,9 Teile IPDI, 27 Teile 1,6-Hexandiol, 2,2 Teile n-Butanol und 0,001 Teile DBTL solange bei 70° C gerührt, bis sämtliche NCO-Gruppen abreagiert haben. Festkörper = 55 %. Das erhaltene Polymer hat ein mittleres Molekulargewicht $M_n$ von 1500.

**Polymer L:**

Unter Schutzgas werden 25,0 Teile Xylol, 43,0 Teile IPDI, 22,5 Teile 1,6-Hexandiol und 9,5 Teile 2-Ethylhexanol solange bei 80° C gerührt, bis sämtliche NCO-Gruppen abreagiert haben. Festkörper = 75 %. Das erhaltene Polymer hat ein mittleres Molekulargewicht $M_n$ von 1000.

**Polymer M:**

Analog zur Herstellung von Polymer I werden 31,7 Teile n-Decanol mit 68,3 Teilen Caprolacton zu einem Polyester mit einem mittleren Molekulargewicht $M_n$ von 500 umgesetzt. Unter Schutzgas werden 25,3 Teile des so erhaltenen Polyesters mit 25,0 Teilen Xylol, 30,1 Teilen IPDI und 19,6 Teilen 2-Ethylhexandiol-1,3, solange bei 80° C gerührt, bis sämtliche NCO-Gruppen abreagiert haben. Festkörper = 75 %. Das erhaltene Polymer hat ein mittleres Molekulargewicht $M_n$ von 1500.

**Polymer N:**

Unter Schutzgas wird bei 50° C zu 14,4 Teilen Toluylendiisocyanat in 14,4 Teilen MPA eine Lösung von 19,4 Teilen des unter Polymer M beschriebenen Caprolactonpolyesters mit $M_n$ = 500 in 19,4 Teilen MPA innerhalb von 10 Minuten zugetropft. Anschließend läßt man eine Lösung von 16,2 Teilen Polyethylenglykol ($M_n$ = 200) in 16,2 Teilen MPA innerhalb von 10 Minuten zutropfen. Dann wird die Mischung auf 70° C erhitzt und solange bei dieser Temperatur gerührt, bis sämtliche NCO-Gruppen abreagiert haben. Festkörper = 50 %. Das erhaltene Polymer hat ein mittleres Molekulargewicht $M_n$ von 1300.

**Polymer P**

Unter Schutzgas werden bei 50° C 23,2 Teile 1,5-Pentandiol zu 26,8 Teilen Phenylisocyanat in 50 Teilen N-Methylpyrrolidon unter Rühren zugegetropft. Anschließend wird so lange bei 70° C gerührt, bis sämtliche NCO-Gruppen abreagiert haben. Festkörper = 50 %. Das erhaltene Polymer hat ein mittleres Molekulargewicht $M_n$ von 220.

Allgemeine Herstellungsvorschrift für die Beispiele 1 bis 20

Stufe a: Unter Schutzgas werden die in der Tabelle aufgeführten Ausgangsmaterialien in den angegebenen Mengenverhältnissen zusammengegeben, mit 0,01 Teilen Dibutylzinndilaurat versetzt und bei 80° C gerührt. Die erste Stufe ist beendet, sobald der in der Tabelle angegebene Anteil an ursprünglich eingesetzten NCO-Gruppen abreagiert ist.

Stufe b: Nach Beendigung der ersten Stufe werden die Komponenten der Stufe b) hinzugefügt und das Reaktionsgemisch weiter bei 80° C gerührt bis der in der Tabelle angegebene NCO-Umsetzungsgrad erreicht ist.

Stufe c: Zur Abreaktion der verbleibenden NCO-Gruppen wird das Reaktionsgemisch mit den Komponenten der Stufe c) versetzt und noch 1 Stunde bei 80° C gerührt.

Die Festkörper der Produkte sind in der nachstehenden Tabelle aufgeführt.

Bei den Herstellungsbeispielen kommen die folgenden Polyisocyanate zum Einsatz:

Polyisocyanat (1): Aromatisches Polyisocyanat auf Basis Toluylendiisocyanat (TDI); 75%ig in Ethylacetat; z. B. Desmodur L

Polyisocyanat (2): Aliphatisches Polyisocyanat auf Basis Hexamethylendiisocyanat (HMDI); 75%-ig in Xylol/Ethylglykolacetat 1:1; z.B. Desmodur N.

Polyisocyanat (3): Aromatisch-aliphatisches Polyisocyanat auf Basis HMDI/TDI; 60%-ig in Ethylacetat; z. B. Desmodur HL.

Polyisocyanat (4): Aromatisches Polyisocyanat auf Basis TDI; 51%ig in Butylacetat; z. B. Desmodur IL.

Polyisocyanat (5): Aromatisches Polyisocyanat auf Basis TDI; 50%-ig in Isobutylacetat; z. B. Polyurene KC.

Polyisocyanat (6): Aromatisches Polyisocyanat auf Basis TDI/Diphenylmethan-4,4-diisocyanat; 50%-ig in Isobutylacetat; z. B. Polyurene HR.

Beispiel 20 ist ein Vergleichsbeispiel entsprechend EP-A-0154 678. Es unterscheidet sich von Beispiel 19 nur durch das Fehlen des erfindungsgemäßen Anteils an einer urethangruppenhaltigen Komponente Y'-OH (Polymer P): Während in Beispiel 19 als Y-OH 99 Mol-% Octanol und als Y'-OH 1-Mol-% Polymer P

verwendet werden, wird in Beispiel 20 nur Octanol eingesetzt.

| Beispiel Nr. | Stufe a): Komponenten | Teile | % NCO | Stufe b): Komponenten | Teile | % NCO | Stufe c): Komponenten | Teile | Festkörper (%) |
|---|---|---|---|---|---|---|---|---|---|
| 1 | Polyisocyanat (2)<br>Polymer L<br>Xylol | 11,3<br>25,0<br>18,2 | 40 | Polyethylenglykol, Mn=1000<br>Butylacetat | 1,0<br>7,2 | 20 | N,N-Dimethyl-1,3-propandiamin<br>NMP (N-Methylpyrrolidon) | 1,8<br>35,5 | 19 |
| 2 | Polyisocyanat (2)<br>Polymer N<br>MPA (Methoxypropylacetat) | 15,1<br>25,7<br>7,6 | 20 | Cyclohexandimethanol<br>MPA | 1,0<br>6,6 | 25 | N,N-Dimethylethoxyethanolamin<br>MPA | 4,8<br>39,2 | 30 |
| 3 | Polyisocyanat (6)<br>Polymer I<br>Butylacetat | 9,0<br>23,5<br>23,5 | 70 | Polymer M | 2,7 | 13 | Di-(2-picolyl)-amin<br>Butylacetat | 0,6<br>40,7 | 30 |
| 4 | Polyisocyanat (2)<br>Polymer A<br>MPA | 10,2<br>18,3<br>20,5 | 40 | Polyethylenglykol, Mn=1000<br>MPA | 3,7<br>41,2 | 20 | 1-(3-Aminopropyl)-imidazol<br>MPA | 1,9<br>4,2 | 30 |
| 5 | Polyisocyanat (2)<br>Polymer K<br>Xylol | 7,8<br>26,3<br>6,5 | 40 | Polyethylenglykol, Mn=1000<br>MPA | 3,1<br>34,3 | 20 | 1-(3-Aminopropyl)-imidazol<br>MPA/NMP 2:8 | 1,6<br>20,4 | 25 |
| 6 | Polyisocyanat (1)<br>Polymer B<br>MPA | 8,8<br>15,2<br>17,5 | 50 | 1,6-Hexandiol<br>MPA | 0,2<br>28,1 | 10 | 4-(2-Aminoethyl)-pyridin<br>MPA/NMP 1:9 | 1,4<br>28,8 | 22 |
| 7 | Polyisocyanat (5)<br>Polymer C<br>MPA/NMP 1:1 | 29,0<br>11,7<br>19,9 | 20 | Polyethylenglykol, Mn=300<br>MPA | 2,2<br>29,2 | 30 | N,N-Dimethyl-1,3-propandiamin<br>MPA | 2,4<br>5,6 | 30 |

| Beispiel Nr. | Stufe a): Komponenten | Teile | % NCO | Stufe b): Komponenten | Teile | % NCO | Stufe c): Komponenten | Teile | Festkörper (%) |
|---|---|---|---|---|---|---|---|---|---|
| 8 | Polyisocyanat (1)<br>Polymer D<br>MPA | 8,5<br>12,4<br>13,3 | 35 | Polypropylenglykol, Mn=1000<br>MPA | 3,9<br>31,9 | 30 | N-Aminopropyl-morpholin<br>MPA/NMP 1:9 | 1,6<br>28,4 | 23 |
| 9 | Polyisocyanat (2)<br>Polymer D<br>MPA | 8,1<br>25,8<br>22,9 | 60 | Trimethylolpropan<br>MPA | 0,1<br>38,2 | 5 | 1-(2-Hydroxyethyl)-piperidin<br>MPA | 1,5<br>3,4 | 30 |
| 10 | Polyisocyanat (2)<br>Polymer E<br>MPA | 8,0<br>12,6<br>14,5 | 20 | 1,4-Diaminobutan<br>MPA/NMP 1:1 | 0,2<br>44,2 | 10 | 1-(2-Hydroxyethyl)-piperazin<br>NMP | 2,5<br>18,0 | 20 |
| 11 | Polyisocyanat (3)<br>Polymer E<br>MPA/NMP 4:6 | 11,0<br>23,3<br>51,7 | 45 | Polyethylenglykol, Mn=600<br>MPA | 1,0<br>9,7 | 15 | 4-(2-Hydroxyethyl)-morpholin<br>MPA | 1,0<br>2,3 | 30 |
| 12 | Polyisocyanat (2)<br>Polymer F<br>MPA | 7,1<br>12,2<br>14,3 | 15 | Polybutadiendiol, Mn=1000<br>MPA/NMP 3:7 | 1,3<br>36,8 | 10 | N,N-Dimethyl-1,3-propandiamin<br>NMP | 2,1<br>26,2 | 20 |
| 13 | Polyisocyanat (4)<br>Polymer L<br>Polymer I<br>Butylacetat | 11,1<br>6,0<br>8,3<br>11,7 | 40 | Polyethylenglykol, Mn=1000<br>Butylacetat | 0,5<br>0,5 | 20 | N,N-Dimethyl-1,3-propandiamin<br>NMP | 0,9<br>60,8 | 20 |
| 14 | Polyisocyanat (4)<br>Polymer I<br>NMP | 13,0<br>19,9<br>33,4 | 40 | Polymer G<br>Xylol | 2,9<br>2,2 | 20 | N,N-Diethylbutan-1,4-diamin<br>Xylol | 1,4<br>27,2 | 30 |

| Beispiel Nr. | Stufe a): Komponenten | Teile | % NCO | Stufe b): Komponenten | Teile | % NCO | Stufe c): Komponenten | Teile | Festkörper (%) |
|---|---|---|---|---|---|---|---|---|---|
| 15 | Polyisocyanat (2)<br>Polymer I<br>NMP | 6,6<br>23,1<br>27,1 | 45 | Polyethylenglykol, Mn=300<br>Polymer G | 0,3<br>1,1 | 15 | N,N-Dimethylethanolamin<br>Xylol | 0,9<br>40,9 | 30 |
| 16 | Polyisocyanat (2)<br>Polymer L<br>Xylol | 11,3<br>25,0<br>18,2 | 40 | Polyethylenglykol, Mn=1000<br>Butylacetat | 1,0<br>7,2 | 20 | N,N-Dimethyl-1,3-propandiamin<br>NMP | 1,8<br>35,5 | 30 |
| 17 | Polyisocyanat (1)<br>Polymer M<br>Xylol | 10,3<br>23,6<br>17,0 | 35 | Polytetrahydrofurandiol, Mn=640<br>Xylol | 3,5<br>28,4 | 35 | 2-(1-Pyrolidyl)-ethylamin<br>NMP | 1,0<br>16,2 | 30 |
| 18 | Polyisocyanat (2)<br>Polymer I<br>MPA | 8,7<br>30,2<br>34,7 | 45 | Bis(hydroxymethyl)-polydimethylsiloxan Mn=600<br>MPA | 1,4<br>1,4 | 15 | 4-(2-Hydroxyethyl)-morpholin<br>MPA | 1,7<br>21,9 | 40 |
| 19 | Polyisocyanat (3)<br>Polymer P<br>Octanol<br>MPA | 33,9<br>0,25<br>7,0<br>13,8 | 0,7<br>69,3 | Cyclohexandimethanol<br>MPA | 0,5<br>37,8 | 10 | 4-(2-Hydroxyethyl)-morpholin<br>MPA | 2,0<br>4,8 | 30 |
| 20* | Polyisocyanat (3)<br>Octanol<br>MPA | 33,9<br>7,1<br>13,9 | 70 | Cyclohexandimethanol<br>MPA | 0,5<br>37,8 | 10 | 4-(2-Hydroxyethyl)-morpholin<br>MPA | 2,0<br>4,8 | 30 |

*: Vergleichsbeispiel nach EP-A-0 154 678

## Verwendungsbeispiel:

Mit der nach Beispiel 3 erhaltenen Additionsverbindung wurde eine Pigmentpaste hergestellt. Hierzu wurden 386,5 g C.I.1 Pigment White 6 (77,3 %), 25,0 g Produktlösung, 88,5 g MPA und 300 g Glasperlen zusammengegeben und anschließend unter Verwendung einer Polypropylenscheibe von 40 mm Durchmesser 20 Min. bei 40° C dispergiert. Nach dem Abfiltrieren der Glasperlen wurde eine fließfähige Pigmentpaste mit ausgezeichneten rheologischen Eigenschaften erhalten. Durch Zugabe von 20 % dieser Pigmentpaste zu einem Acryl-Melamin-Klarlack (58,1% fremdvernetzendes Acrylharz, 14,9 % Melaminharz, 27 % Aromatenfraktion, Kp = 163 - 181° C) und zu einem Aldehydharz-Klarlack (42,8 % Aldehydharz, 57,2 % Xylol) wurden hochglänzende Lackfilme mit einwandfreier Oberfläche erhalten.

Wurde unter gleichen Bedingungen mit dem selben Pigment eine Pigmentpaste ohne Zugabe der Additionsverbindung hergestellt, konnte ein maximaler Pigmentgehalt von 42 % erreicht werden.

Mit anderen Pigmenten wurden ähnliche Ergebnisse erhalten (in MPA als Lösungsmittel):

| Pigment | Pigmentgehalt Additivpaste | %Additionsverbindung nach Beispiel 3 | Pigmentgehalt O-Probe |
|---|---|---|---|
| C.I.1 PR 101 | 72,5 % | 6,5 % | 50 % |
| Gasruß Regular Color Channel | 13,3 % | 11,5 % | 6,3 % |
| C.I.1 PR 177 | 12,4 % | 10 % | 7,8 % |

Mit den nach Beispiel 18 und 19 erhaltenen erfindungsgemäßen Additionsverbindungen und der Vergleichsverbindung nach Beispiel 20 wurden Pigmentpasten mit C.I. PR 101 in Methoxypropylacetat hergestellt.

| Herstellungsbeispiel | Pigmentgehalt | % Additionsverbindung | % MPA |
|---|---|---|---|
| 18 | 75,7 % | 5,3 % | 19,0 % |
| 19 | 66,8 % | 8,7 % | 24,5 % |
| 20 | 66,8 % | 8,7 % | 24,5 % |

Bei der zum Vergleich hergestellten O-Probe ohne Additionsverbindung betrug der maximale Pigmentgehalt, bei dem noch eine fließfähige Paste erhalten werden konnte, nur 50 %.

Die Viskosität (Schergeschwindigkeit 20 $s^{-1}$) der mit der erfindungsgemäßen Additionsverbindung nach Beispiel 19 erhaltenen Paste betrug 2000 mPas und lag damit erheblich niedriger als bei der mit Vergleichsverbindung nach Beispiel 20 erhaltenen Paste, die eine Viskosität von 2600 mPas aufwies.

Ähnliche Ergebnisse wurden mit C.I.1 Pigment White 6 erhalten:

| Herstellungsbeispiel | Pigmentgehalt | % Additionsverbindung | % MPA |
|---|---|---|---|
| 18 | 80,9 % | 4,8 % | 14,3 % |
| 19 | 68,0 % | 6,1 % | 25,9 % |
| 20 | 66,9 % | 6,1 % | 27,0 % |
| O-Probe | 42,0 % | 0 | 58,0 % |

**Beispiel 21:**

Man verfährt wie in Beispiel 3 beschrieben, setzt aber die Komponenten von Stufe a) und b) als Mischung ein und gibt die Komponenten der Stufe c) nach Abreaktion von 73 % der ursprünglich eingesetzten NCO-Gruppen zu.

**Beispiel 22:**

Man verfährt wie in Beispiel 3 beschrieben, setzt aber nach Beendigung von Stufe a) die Komponenten der Stufen b) und c) als Mischung ein und rührt noch solange bei 80° C bis keine NCO-Gruppen mehr nachweisbar sind.

**Patentansprüche**

1. Als Dispergiermittel und als Dispersionsstabilisatoren geeignete Additionsverbindungen und deren Salze, die dadurch erhältlich sind, daß gegebenenfalls in Anwesenheit von Lösungsmitteln und gegebenenfalls in Gegenwart von Umsetzungskatalysatoren, Polyisocyanate mit einer mittleren Funktionalität von 2,5 bis 10

a) mit Monohydroxyverbindungen der Formel I

Y-OH I

wobei Y die folgenden Bedeutungen hat:

i) aliphatische und/oder cycloaliphatische Kohlenwasserstoffgruppen mit 8 bis 30 Kohlenstoffatomen, deren Wasserstoffatome teilweise durch Halogene und/oder Arylreste ersetzt sein können,

ii) mindestens eine -O-, und/oder -COO-Gruppe enthaltende aliphatische, cycloaliphatische und/oder aromatische Gruppen mit mittleren Molekulargewichten $\overline{M}_n$ von 200 bis 10000, wobei die Wasserstoffatome teilweise durch Halogene ersetzt sein können,

in einer solchen Menge umgesetzt werden, daß 10 bis 70 %, vorzugsweise 15 bis 45 % und besonders bevorzugt 20 bis 40 % der NCO-Gruppen umgesetzt sind,

b) mit Verbindungen der Formel II

$G-(E)_n$ II

wobei E für -OH, - $NH_2$ und/oder -NHR (worin R eine Alkylgruppe mit 1 bis 4 Kohlenstoffatomen darstellt), und n für 2 oder 3 stehen, und G eine mindestens 2 Kohlenstoffatome enthaltende aliphatische cycloaliphatische und/oder aromatische Gruppe mit mittlerem Molekulargewicht $\overline{M}_n$ von höchstens 3000 darstellt, die -O-, -COO-, -CONH-, -S-, und/oder -$SO_2$-Gruppen enthalten kann, in einer solchen Menge umgesetzt werden, daß 1 bis 50 %, vorzugsweise 5 bis 45 % und besonders bevorzugt 15 bis 40 % der NCO-Gruppen der ursprünglich eingesetzten Polyisocyanate umgesetzt sind, wobei jedoch durch die Umsetzungen a) und b) insgesamt mindestens 20 % und maximal 85 %, vorzugsweise 30 bis 65 % und besonders bevorzugt 40 bis 60 % der NCO-Gruppen der ursprünglich eingesetzten Polyisocyanate umgesetzt sind,

c) mit Verbindungen der allgemeinen Formel III

Z-Q III

worin Q für -OH, -$NH_2$, -NHR (worin R für eine Alkylgruppe mit 1 bis 4 Kohlenstoffatomen steht) oder -SH steht und Z eine aliphatische Gruppe mit 2 bis 10 C-Atomen mit mindestens einer tertiären Aminogruppe oder eine heterocyclische Gruppe mit mindestens einem basischen Ringstickstoffatom ist, das kein Wasserstoffatom enthält, wobei die heterocyclische Gruppe über eine Alkylengruppe mit bis zu 10 C-Atomen an die Gruppe Q gebunden sein kann, in einer solchen Menge umgesetzt werden, daß auf jede verbleibende in den Stufen a) und b) nicht umgesetzte Isocyanatgruppe mindestens ein Molekül der Verbindung Z-Q entfällt,

dadurch gekennzeichnet, daß mindestens 1 Mol-% der oben definierten Verbindungen der Formel I ersetzt sind durch solche Verbindungen der Formel Ia,

Y'- OH Ia

in den Y' eine aliphatische, cycloaliphatische und/oder aromatische Gruppe mit mittleren Molekulargewichten $\overline{M}_n$ von 200 bis 10000, wobei die Wasserstoffatome teilweise durch Halogene ersetzt sein können, und die mindestens eine -NHCOO-Gruppe enthalten, darstellt und/oder mindestens 1 Mol-% der oben definierten Verbindungen der Formel I ersetzt sind durch monohydroxyfunktionelle Polyacrylsäureester und/oder Polymethacrylsäureester und/oder Copolymerisaten davon mit bis zu 50 Mol-% (bezogen auf Monomereinheiten) Comonomeren wie Vinylester, Vinylether, Styrol, Vinyltoluol und/oder Vinylcyclohexan, mit einem mittleren Molekulargewicht $\overline{M}_n$ von höchstens 10000, und/oder mindestens 1 Mol-% der oben definierten Verbindungen der Formel II ersetzt sind durch solche Verbindungen der Formel II a),

G'- (OH)n IIa

in denen G' eine mindestens 2 Kohlenstoffatome enthaltende aliphatische, cycloaliphatische und/oder aromatische Gruppe mit mittlerem Molekulargewicht $\overline{M}_n$ von höchstens 3000 darstellt, die mindestens eine -NHCOO- und/oder -$Si(CH_3)_2O$-Gruppe enthält, darstellt und n für eine Zahl von 2 bis 3 steht.

2. Additionsverbindungen und deren Salze nach Anspruch 1, dadurch gekennzeichnet, daß mindestens 5 Mol-% der oben definierten Verbindungen der Formel I und/oder der Formel II ersetzt sind.

3. Additionsverbindungen und deren Salze nach Anspruch 1 oder 2, dadurch gekennzeichnet, daß mindestens 50 Mol-% der oben definierten Verbindungen der Formel I und/oder der Formel II ersetzt sind.

4. Additionsverbindungen und deren Salze nach einem oder mehreren der Ansprüche 1 bis 3, dadurch gekennzeichnet, daß die Monohydroxyverbindungen der Formel Ia Polyurethane, Polyether-Polyurethane, Polyester-Polyurethane und/oder Polyether-Polyester-Polyurethane mit mittleren Molekulargewichten $\overline{M}_n$ von 500 bis 3000 sind.

5. Additionsverbindungen und deren Salze nach einem oder mehreren der Ansprüche 1 bis 4, dadurch gekennzeichnet, daß die Verbindungen der Formel IIa Polyurethane, Polyether-Polyurethane, Polyester-Polyurethane und/oder Polyether-Polyester-Polyurethane mit 2 bis 3 OH-Gruppen und mittleren Molekulargewichten $\overline{M}_n$ von 300 bis 2500 sind.

6. Verfahren zur Herstellung von als Dispergiermittel und als Dispersionsstabilisatoren geeigneten Additionsverbindungen und deren Salzen, die dadurch erhältlich sind, daß gegebenenfalls in Anwesenheit von Lösungsmitteln und gegebenenfalls in Gegenwart von Umsetzungskatalysatoren, Polyisocyanate mit einer mittleren Funktionalität von 2,5 bis 10

a) mit Monohydroxyverbindungen der Formel I

Y-OH I

wobei Y die folgenden Bedeutungen hat:

i) aliphatische und/oder cycloaliphatische Kohlenwasserstoffgruppen mit 8 bis 30 Kohlenstoffatomen, deren Wasserstoffatome teilweise durch Halogene und/oder Arylreste ersetzt sein können,

ii) mindestens eine -O-, und/oder-COO-Gruppe enthaltende aliphatische, cycloaliphatische und/oder aromatische Gruppen mit mittleren Molekulargewichten $\overline{M}_n$ von 200 bis 10000, wobei die Wasserstoffatome teilweise durch Halogene ersetzt sein können,

in einer solchen Menge umgesetzt werden, daß 10 bis 70 %, vorzugsweise 15 bis 45 % und besonders bevorzugt 20 bis 40 % der NCO-Gruppen umgesetzt sind,

b) mit Verbindungen der Formel II

$G\text{-}(E)_n$ II

wobei E für -OH, $-NH_2$ und/oder -NHR (worin R eine Alkylgruppe mit 1 bis 4 Kohlenstoffatomen darstellt), und n für 2 oder 3 stehen, und G eine mindestens 2 Kohlenstoffatome enthaltende alphatische, cycloaliphatische und/oder aromatische Gruppe mit mittlerem Molekulargewicht $\overline{M}_n$ von höchstens 3000 darstellt, die -O-, -COO-, -CONH-, -S-, und/oder $-SO_2$ Gruppen enthalten kann, in einer solchen Menge umgesetzt werden, daß 1 bis 50 %, vorzugsweise 5 bis 45 % und besonders bevorzugt 15 bis 40 % der NCO-Gruppen der ursprünglich eingesetzten Polyisocyanate umgesetzt sind, wobei jedoch durch die Umsetzungen a) und b) insgesamt mindestens 20 % und maximal 85 %, vorzugsweise 30 bis 65 % und besonders bevorzugt 40 bis 60 % der NCO-Gruppen der ursprünglich eingesetzten Polyisocyanate umgesetzt sind,

c) mit Verbindungen der allgemeinen Formel III

Z-Q III

worin Q für -OH, $-NH_2$, -NHR (worin R für eine Alkylgruppe mit 1 bis 4 Kohlenstoffatomen steht) oder -SH steht und Z eine aliphatische Gruppe mit 2 bis 10 C-Atomen mit mindestens einer tertiären Aminogruppe oder eine heterocyclische Gruppe mit mindestens einem basischen Ringstickstoffatom ist, das kein Wasserstoffatom enthält, wobei die heterocyclische Gruppe über eine Alkylengruppe mit bis zu 10 C-Atomen an die Gruppe Q gebunden sein kann, in einer solchen Menge umgesetzt werden, daß jede verbleibende in den Stufen a) und b) nicht umgesetzte Isocyanatgruppe mindestens ein Molekül der Verbindung Z-Q entfällt,

dadurch gekennzeichnet, daß mindestens 1 Mol-% der oben definierten Verbindungen der Formel I

ersetzt sind durch solche Verbindungen der Formel Ia,

'Y-OH  Ia

in denen Y' eine aliphatische, cycloaliphatische und/oder aromatische Gruppe mit mittleren Molekulargewichten $\overline{M}_n$ von 200 bis 10000, wobei die Wasserstoffatome teilweise durch Halogene ersetzt sein können, und die mindestens eine -NHCOO-Gruppe enthalten, darstellt und/oder
mindestens 1 Mol-% der oben der definierten Verbindungen der Formel I ersetzt sind durch monohydroxyfunktionelle Polyacrylsäureester und/oder Polymethacrylsäureester und/oder Copolymerisaten davon mit bis zu 50 Mol-% (bezogen auf Monomereinheiten), Comonomeren wie Vinylester, Vinylether, Styrol, Vinyltoluol und/oder Vinylcyclohexan, mit einem mittleren Molekulargewicht $\overline{M}_n$ von höchstens 10000, und/oder mindestens 1 Mol-% der oben definierten Verbindungen der Formel II ersetzt sind durch solche Verbindungen der Formel II a),

$G'-(OH)_n$  IIa

in denen G' eine mindestens 2 Kohlenstoffatome enthaltende aliphatische, cycloaliphatische und/oder aromatische Gruppe mit mittlerem Molekulargewicht $\overline{M}_n$ höchstens 3000 darstellt, die mindestens eine -NHCOO- und/oder $-Si(CH_3)_2O$-Gruppe enthält, darstellt und n für eine Zahl von 2 bis 3 steht.

**7.** Verfahren nach Anspruch 6, dadurch gekennzeichnet, daß mindestens 5 Mol-% der oben definierten Verbindungen der Formel I und/oder der Formel II ersetzt sind.

**8.** Verfahren nach Anspruch 6 oder 7, dadurch gekennzeichnet, daß mindestens 50 Mol-% der oben definierten Verbindungen der Formel I und/oder der Formel II ersetzt sind.

**9.** Verfahren nach einem oder mehreren der Ansprüche 6 bis 8, dadurch gekennzeichnet, daß die Monohydroxyverbindungen der Formel Ia Polyurethane, Polyether-Polyurethane, Polyester-Polyurethane und/oder Polyether-Polyester-Polyurethane mit mittleren Molekulargewichten $\overline{M}_n$ von 500 bis 3000 sind.

**10.** Verfahren nach einem oder mehreren der Ansprüche 6 bis 9, dadurch gekennzeichnet, daß die Verbindungen der Formel IIa Polyurethane, Polyether-Polyurethane, Polyester-Polyurethane und/oder Polyether-Polyester-Polyurethane mit 2 bis 3 OH-Gruppen und mittleren Molekulargewichten $\overline{M}_n$ von 300 bis 2500 sind.

**11.** Verwendung der Additionsverbindungen und deren Salze, gemäß Ansprüchen 1 bis 10 als Dispergiermittel und als Dispersionsstabilisatoren.

**12.** In flüssige Systeme einzuarbeitende pulver- oder faserförmige Feststoffe, die mit Dispergiermittel beschichtet sind, dadurch gekennzeichnet, daß sie mit Additionsverbindungen oder deren Salzen gemäß Ansprüchen 1 bis 10 beschichtet sind.

**13.** Pulverförmige Feststoffe nach Anspruch 12, dadurch gekennzeichnet, daß die Feststoffe Pigmente sind.

## Claims

**1.** Addition compounds useful as dispersing agents and dispersion stabilisers and their salts, which can be obtained by reacting polyisocyanates having an average functionality of 2.5 to 10, optionally in the presence of solvents and optionally in the presence of reaction catalysts,
a) with monohydroxy compounds of formula I

Y-OH  I

wherein Y represents
i) aliphatic and/or cycloaliphatic hydrocarbon groups with 8 to 30 carbon atoms, whose hydrogen atoms can be substituted in part by halogens and/or aryl residues,

ii) aliphatic, cycloaliphatic and/or aromatic groups containing at least one -O- and/or -COO- group, with average molecular weights $\overline{M}_n$ of 200 to 10 000, wherein the hydrogen atoms can be substituted in part by halogens,

in a quantity such that 10 to 70%, preferably 15 to 45%, and particularly preferred 20 to 40%, of the NCO-groups are converted,

b) with compounds of formula II

G-$(E)_n$  II

wherein E stands for an -OH, $-NH_2$ and/or -NHR (where R represents an alkyl group with 1 to 4 carbon atoms) group and n for 2 or 3, and G represents an aliphatic, cycloaliphatic and/or aromatic group containing at least 2 carbon atoms, with an average molecular weight $\overline{M}_n$ of 3000 at most, which can contain -O-, -COO-, -CONH-, -S- and/or $-SO_2$- groups,

in a quantity such that 1 to 50%, preferably 5 to 45%, and particularly preferred 15 to 40%, of the NCO-groups of the original polyisocyanates are converted, wherein however through the reactions a) and b) altogether at minimum 20% and at maximum 85%, preferably 30 to 65%, and particularly preferred 40 to 60% of the NCO- groups of the original polyisocyanates are converted,

c) with compounds of the general formula III

Z-Q  III

wherein Q is an -OH, $-NH_2$, -NHR (where R is an alkyl group with 1 to 4 carbon atoms) or -SH group and Z is an aliphatic group with 2 to 10 carbon atoms with at least one tertiary amine group or a heterocyclic group with at least one basic ring nitrogen atom that is not bonded to a hydrogen atom, wherein the heterocyclic group can be bonded to the group Q through an alkylene group having up to 10 carbon atoms, in a quantity such that at least one molecule of the compound Z-Q goes to every isocyanate group remaining unreacted in the stages a) and b),

characterised in that at least 1 mol-% of the above defined compounds of formula I are substituted by such compounds of formula Ia,

Y'-OH  Ia

in which Y' represents an aliphatic, cycloaliphatic and/or aromatic group with average molecular weights $\overline{M}_n$ of 200 to 10 000, wherein the hydrogen atoms can be substituted in part by halogens and which contains at least one -NHCOO- group, and/or

at least 1 mol-% of the above defined compounds of formula I are substituted by monohydroxy functional polyacrylic acid esters and/or polymethacrylic acid esters and/or copolymerisates of them with up to 50 mol-% (in relation to the monomer units) of comonomers like vinyl ester, vinyl ether, styrene, vinyltoluene and/or vinylcyclohexane, with an average molecular weight $\overline{M}_n$ of 10 000 at most, and/or at least 1 mol-% of the above defined compounds of formula II are substituted by such compounds of formula IIa,

G'-$(OH)_n$  IIa

in which G' represents an aliphatic, cycloaliphatic and/or aromatic group containing at least 2 carbon atoms, with an average molecular weight $\overline{M}_n$ of 3000 at most, and which contains at least one -NHCOO- and/or $-Si(CH_3)_2O$- group, and n stands for 2 or 3.

2. Addition compounds and their salts according to claim 1, characterised in that at least 5 mol-% of the above defined compounds of formula I and/or of formula II are substituted.

3. Addition compounds and their salts according to claims 1 and 2, characterised in that at least 50 mol-% of the above defined compounds of formula I and/or of formula II are substituted.

4. Addition compounds and their salts according to one or several of claims 1 to 3, characterised in that the monohydroxy compounds of formula Ia are polyurethanes, polyether-polyurethanes, polyester-polyurethanes and/or polyether-polyester-polyurethanes with average molecular weights $\overline{M}_n$ of 500 to 3000.

5. Addition compounds and their salts according to one or several of claims 1 to 4, characterised in that the compounds of formula IIa are polyurethanes, polyether-polyurethanes, polyester-polyurethanes and/or polyether-polyester-polyurethanes with 2 to 3 OH-groups and average molecular weights $\overline{M}_n$ of 300 to 2500.

6. A process for producing addition compounds useful as dispersing agents and dispersion stabilisers and their salts, which can be obtained by reacting polyisocyanates having an average functionality of 2.5 to 10, optionally in the presence of solvents and optionally in the presence of reaction catalysts,
a) with monohydroxy compounds of formula I

Y-OH I

wherein Y represents
i) aliphatic and/or cycloaliphatic hydrocarbon groups with 8 to 30 carbon atoms, whose hydrogen atoms can be substituted in part by halogens and/or aryl residues,
ii) aliphatic, cycloaliphatic and/or aromatic groups containing at least one -O- and/or -COO- group, with average molecular weights $\overline{M}_n$ of 200 to 10 000, wherein the hydrogen atoms can be substituted in part by halogens,
in a quantity such that 10 to 70%, preferably 15 to 45%, and particularly preferred 20 to 40%, of the NCO-groups are converted,
b) with compounds of formula II

G-$(E)_n$ II

wherein E stands for an -OH, -$NH_2$ and/or -NHR (where R represents an alkyl group with 1 to 4 carbon atoms) group and n for 2 or 3, and G represents an aliphatic, cycloaliphatic and/or aromatic group containing at least 2 carbon atoms, with an average molecular weight $\overline{M}_n$ of 3000 at most, which can contain -O-, -COO-, -CONH-, -S- and/or -$SO_2$- groups,
in a quantity such that 1 to 50%, preferably 5 to 45%, and particularly preferred 15 to 40%, of the NCO-groups of the original polyisocyanates are converted, wherein however through the reactions a) and b) altogether at minimum 20% and at maximum 85%, preferably 30 to 65%, and particularly preferred 40 to 60% of the NCO- groups of the original polyisocyanates are converted,
c) with compounds of the general formula III

Z-Q III

wherein Q is an -OH, -$NH_2$, -NHR (where R is an alkyl group with 1 to 4 carbon atoms) or -SH group and Z is an aliphatic group with 2 to 10 carbon atoms with at least one tertiary amine group or a heterocyclic group with at least one basic ring nitrogen atom that is not bonded to a hydrogen atom, wherein the heterocyclic group can be bonded to the group Q through an alkylene group having up to 10 carbon atoms, in a quantity such that at least one molecule of the compound Z-Q goes to every isocyanate group remaining unreacted in the stages a) and b),
characterised in that at least 1 mol-% of the above defined compounds of formula I are substituted by such compounds of formula Ia,

Y'-OH Ia

in which Y' represents an aliphatic, cycloaliphatic and/or aromatic group with average molecular weights $\overline{M}_n$ of 200 to 10 000, wherein the hydrogen atoms can be substituted in part by halogens and which contains at least one -NHCOO- group, and/or
at least 1 mol-% of the above defined compounds of formula I are substituted by monohydroxy functional polyacrylic acid esters and/or polymethacrylic acid esters and/or copolymerisates of them with up to 50 mol-% (in relation to the monomer units) of comonomers like vinyl ester, vinyl ether, styrene, vinyltoluene and/or vinylcyclohexane, with an average molecular weight $\overline{M}_n$ of 10 000 at most, and/or at least 1 mol-% of the above defined compounds of formula II are substituted by such compounds of formula IIa,

G'-$(OH)_n$ IIa

in which G' represents an aliphatic, cycloaliphatic and/or aromatic group containing at least 2 carbon atoms, with an average molecular weight $\overline{M}_n$ of 3000 at most, and which contains at least one -NHCOO-and/or $-Si(CH_3)_2O-$ group, and n stands for 2 or 3.

**7.** A process according to claim 6, characterised in that at least 5 mol-% of the above defined compounds of formula I and/or of formula II are substituted.

**8.** A process according to claims 6 and 7, characterised in that at least 50 mol-% of the above defined compounds of formula I and/or of formula II are substituted.

**9.** A process according to one or several of claims 6 to 8, characterised in that the monohydroxy compounds of formula Ia are polyurethanes, polyether-polyurethanes, polyester-polyurethanes and/or polyether-polyester-polyurethanes with average molecular weights $\overline{M}_n$ of 500 to 3000.

**10.** A process according to one or several of claims 6 to 9, characterised in that the compounds of formula IIa are polyurethanes, polyether-polyurethanes, polyester-polyurethanes and/or polyether-polyester-polyurethanes with 2 to 3 OH- groups and average molecular weights $\overline{M}_n$ of 300 to 2500.

**11.** Application of the addition compounds and their salts, according to claims 1 to 10, as dispersing agents and dispersion stabilisers.

**12.** Powdered or fibrous solids to be introduced into liquid systems, the said solids being coated with dispersing agent, characterised in that they are coated with addition compounds or their salts according to claims 1 to 10.

**13.** Powdered solids according to claim 13, characterised in that the solids are pigments.

**Revendications**

**1.** Composés d'addition utilisables comme dispersants et stabilisants de dispersion et leurs sels, qui peuvent être obtenus par réaction éventuellement en présence de solvants et éventuellement en présence de catalyseurs de conversion, de polyisocyanates ayant une fonctionnalité moyenne de 2,5 à 10

a) avec des composés monohydroxylés de formule I

Y-OH I

où Y a les significations suivantes:

i) groupes hydrocarbonés aliphatiques et/ou cycloaliphatiques ayant 8 à 30 atomes de carbone, dont les atomes d'hydrogène peuvent être partiellement remplacés par des halogènes et/ou des restes aryle,

ii) groupes aliphatiques, cycloaliphatiques et/ou aromatiques contenant au moins un groupe -O- et/ou -COO- et ayant une masse moléculaire moyenne $\overline{M}_n$ de 200 à 10000, tandis que les atomes d'hydrogène peuvent être remplacés par des halogènes,

en une quantité telle que 10 à 70%, de préférence 15 à 45% et plus avantageusement 20 à 40% des groupes -NCO sont transformés,

b) avec des composés de formule II

$G-(E)_n$ II

où E désigne -OH, $-NH_2$ et/ou -NHR (où R représente un groupe alkyle ayant 1 à 4 atomes de carbone), et n vaut 2 ou 3, et G représente un groupe aliphatique, cycloaliphatique et/ou aromatique contenant au moins 2 atomes de carbone et ayant une masse moléculaire moyenne $\overline{M}_n$ d'au plus 3000, et qui peut contenir des groupes -O-, -COO-, -CONH-, -S- et/ou $-SO_2-$,

en une quantité telle que que 1 à 50%, de préférence 5 à 45% et plus avantageusement 15 à 40% des groupe -NCO des polyisocyanates introduits à l'origine sont transformés, tandis que toutefois sont transformés par l'ensemble des réactions a) et b) au moins 20% et au maximum 85%, de

préférence 30 à 65% et plus avantageusement 40 à 60% des groupes -NCO des polyisocyanates introduits à l'origine,

c) avec des composés de formule générale III

Z-Q III

où Q désigne -OH, $-NH_2$, -NHR (où R représente un groupe alkyle ayant 1 à 4 atomes de carbone) ou -SH et Z est un groupe aliphatique ayant 2 à 10 atomes de carbone avec au moins un groupe amino tertiaire ou un groupe hétérocyclique ayant au moins un atome d'azote basique dans le cycle et ne portant pas d'atome d'hydrogène, tandis que le groupe hétérocyclique peut être lié par un groupe alkylène ayant jusqu'à 10 atomes de carbone au groupe Q, en une quantité telle qu'à chaque groupe isocyanate restant, n'ayant pas réagi dans les étapes a) et b), il revient une molécule de composé Z-Q,

caractérisé en ce qu'au moins 1% en moles des composés de formule I ci-dessus définis sont remplacés par des composés de formule Ia,

Y' - OH Ia

dans lesquels Y' représente un groupe aliphatique, cycloaliphatique et/ou aromatique ayant une masse moléculaire moyenne $\overline{M}_n$ de 200 à 10000, tandis que les atomes d'hydrogène peuvent être remplacés en partie par des halogènes, et qui contiennent au moins un groupe -NHCOO-, et/ou

au moins 1% en moles des composés ci-dessus définis de formule I sont remplacés par des esters d'acide polyacrylique et/ou des esters d'acide polyméthacrylique monohydroxyfonctionnels et/ou des copolymérisats de ceux-ci ayant jusqu'à 50% en moles (par rapport aux unités monomères) de comonomères tels qu'ester de vinyle, éther de vinyle, styrène, vinyltoluène et/ou vinylcyclohexane, ayant une masse moléculaire moyenne $\overline{M}_n$ d'au plus 10000, et/ou

au moins 1% en moles des composés ci-dessus définis de formule II sont remplacés par des composés de formule II a),

$G'-(OH)_n$ IIa

où G' représente un groupe aliphatique, cycloaliphatique et/ou aromatique contenant au moins 2 atomes de carbone, ayant une masse moléculaire moyenne $\overline{M}_n$ d'au plus 3000 et qui contient au moins un groupe -NHCOO- et/ou $-Si(CH_3)_2O-$, et n désigne le nombre 2 ou 3.

2. Composés d'addition et leurs sels selon la revendication 1, caractérisés en ce qu'au moins 5% en moles des composés ci-dessus définis de formule I et/ou de formule II sont remplacés.

3. Composés d'addition et leurs sels selon l'une des revendications 1 ou 2, caractérisés en ce qu'au moins 50% en moles des composés ci-dessus définis de formule I et/ou de formule II sont remplacés.

4. Composés d'addition et leurs sels selon une ou plusieurs des revendications 1 à 3, caractérisés en ce que les composés monohydroxylés de formule Ia sont des polyuréthannes, des polyéther-polyuréthannes, des polyester-polyuréthannes et/ou des polyéther-polyester-polyuréthannes ayant des masses moléculaires moyennes $\overline{M}_n$ de 500 à 3000.

5. Composés d'addition et leurs sels selon une ou plusieurs des revendications 1 à 4, caractérisés en ce que les composés de formule IIa sont des polyuréthannes, des polyéther-polyuréthannes, des polyester-polyuréthannes et/ou des polyéther-polyester-polyuréthannes ayant 2 à 3 groupes OH et des masses moléculaires moyennes $\overline{M}_n$ de 300 à 2500.

6. Procédé pour la préparation de composés d'addition utilisables comme dispersants et stabilisants de dispersion et leurs sels, qui peuvent être obtenus par réaction éventuellement en présence de solvants et éventuellement en présence de catalyseurs de conversion, de polyisocyanates ayant une fonctionnalité moyenne de 2,5 à 10

a) avec des composés monohydroxylés de formule I

Y-OH I

où Y a les significations suivantes:

i) groupes hydrocarbonés aliphatiques et/ou cycloaliphatiques ayant 8 à 30 atomes de carbone, dont les atomes d'hydrogène peuvent être partiellement remplacés par des halogènes et/ou des restes aryle,

ii) groupes aliphatiques, cycloaliphatiques et/ou aromatiques contenant au moins un groupe -O- et/ou -COO- et ayant une masse moléculaire moyenne $\overline{M}_n$ de 200 à 10000, tandis que les atomes d'hydrogène peuvent être remplacés par des halogènes,

en une quantité telle que 10 à 70%, de préférence 15 à 45% et plus avantageusement 20 à 40% des groupes -NCO sont transformés,

b) avec des composés de formule II

$G\text{-}(E)_n$ II

où E désigne -OH, $-NH_2$ et/ou -NHR (où R représente un groupe alkyle ayant 1 à 4 atomes de carbone), et n vaut 2 ou 3, et G représente un groupe aliphatique, cycloaliphatique et/ou aromatique contenant au moins 2 atomes de carbone et ayant une masse moléculaire moyenne $\overline{M}_n$ d'au plus 3000, et qui peut contenir des groupes -O-, -COO-, -CONH-, -S- et/ou $-SO_2-$,

en une quantité telle que que 1 à 50%, de préférence 5 à 45% et plus avantageusement 15 à 40% des groupe -NCO des polyisocyanates introduits à l'origine sont transformés, tandis que toutefois sont transformés par l'ensemble des réactions a) et b) au moins 20% et au maximum 85%, de préférence 30 à 65% et plus avantageusement 40 à 60% des groupes -NCO des polyisocyanates introduits à l'origine,

c) avec des composés de formule générale III

Z-Q III

où Q désigne -OH, $-NH_2$, -NHR (où R représente un groupe alkyle ayant 1 à 4 atomes de carbone) ou -SH et Z est un groupe aliphatique ayant 2 à 10 atomes de carbone avec au moins un groupe amino tertiaire ou un groupe hétérocyclique ayant au moins un atome d'azote basique dans le cycle et ne portant pas d'atome d'hydrogène, tandis que le groupe hétérocyclique peut être lié par un groupe alkylène ayant jusqu'à 10 atomes de carbone au groupe Q, en une quantité telle qu'à chaque groupe isocyanate restant, n'ayant pas réagi dans les étapes a) et b), il revient une molécule de composé Z-Q,

caractérisé en ce qu'au moins 1% en moles des composés de formule I ci-dessus définis sont remplacés par des composés de formule Ia,

Y'- OH Ia

dans lesquels Y' représente un groupe aliphatique, cycloaliphatique et/ou aromatique ayant une masse moléculaire moyenne $\overline{M}_n$ de 200 à 10000, tandis que les atomes d'hydrogène peuvent être remplacés en partie par des halogènes, et qui contiennent au moins un groupe -NHCOO-, et/ou

au moins 1% en moles des composés ci-dessus définis de formule I sont remplacés par des esters d'acide polyacrylique et/ou des esters d'acide polyméthacrylique monohydroxyfonctionnels et/ou des copolymérisats de ceux-ci ayant jusqu'à 50% en moles (par rapport aux unités monomères) de comonomères tels qu'ester de vinyle, éther de vinyle, styrène, vinyltoluène et/ou vinylcyclohexane, ayant une masse moléculaire moyenne $\overline{M}_n$ d'au plus 10000, et/ou

au moins 1% en moles des composés ci-dessus définis de formule II sont remplacés par des composés de formule II a),

$G'\text{-}(OH)_n$ IIa

où G' représente un groupe aliphatique, cycloaliphatique et/ou aromatique contenant au moins 2 atomes de carbone, ayant une masse moléculaire moyenne $\overline{M}_n$ d'au plus 3000 et qui contient au moins un groupe -NHCOO- et/ou $-Si(CH_3)_2O-$, et n désigne le nombre 2 ou 3.

**7.** Procédé selon la revendication 6, caractérisé en ce qu'au moins 5% en moles des composés ci-dessus définis de formule I et/ou de formule II sont remplacés.

8. Procédé selon l'une des revendications 6 ou 7, caractérisé en ce qu'au moins 50% en moles des composés ci-dessus définis de formule I et/ou de formule II sont remplacés.

9. Procédé selon une ou plusieurs des revendications 6 à 8, caractérisé en ce que les composés monohydroxylés de formule Ia sont des polyuréthannes, des polyéther-polyuréthannes, des polyester-polyuréthannes et/ou des polyéther-polyester-polyuréthannes ayant des masses moléculaires moyennes $\overline{M}_n$ de 500 à 3000.

10. Procédé selon une ou plusieurs des revendications 6 à 9, caractérisé en ce que les composés de formule IIa sont des polyuréthannes, des polyéther-polyuréthannes, des polyester-polyuréthannes et/ou des polyéther-polyester-polyuréthannes ayant 2 à 3 groupes OH et des masses moléculaires moyennes $\overline{M}_n$ de 300 à 2500.

11. Utilisation des composés d'addition et de leurs sels, selon l'une quelconque des revendications 1 à 10 comme dispersants et comme stabilisants de dispersion.

12. Matières solides sous forme de poudre ou de fibres pour incorporation dans des systèmes liquides, qui sont enrobées d'agent dispersant, caractérisées en ce qu'elles sont recouvertes avec des composés d'addition ou leurs sels selon l'une quelconque des revendications 1 à 10.

13. Matières solides pulvérulentes selon la revendication 12, caractérisées en ce que les matières solides sont des pigments.